# EUROPEAN PATENT SPECIFICATION

(11) **EP 2 276 241 B1**
(45) Date of publication and mention of the grant of the patent: **18.12.2013**
(21) Application number: 10166195.7
(22) Date of filing: 16.06.2010
(51) Int. Cl.: H04N 5/50, H04N 5/765, H04N 5/77, H04N 5/775, H04N 21/414, H04N 21/432, H04N 21/434, H04N 21/472, H04N 21/482, H04H 20/26, H04N 7/173

(54) **Mobile terminal and multimedia contents controlling method thereof**
Mobiles Endgerät und Steuerungsverfahren für Medieninhalte dafür
Terminal mobile et son procédé de contrôle du contenu multimédia

(30) Priority: 01.07.2009 KR 20090059743
(43) Date of publication of application: 19.01.2011
(73) Proprietor: LG Electronics Inc., Seoul 150-721 (KR)
(72) Inventor: Cho, Beom Seok, 153-801 Seoul (KR); You, Soo Lim, 153-801 Seoul (KR); Bae, Hee Jung, 153-801 Seoul (KR); Nam, Ki Hoa, 153-801 Seoul (KR)
(74) Representative: Cabinet Plasseraud

(56) References cited:
- EP-A1- 1 765 008
- EP-A2- 1 850 585
- US-A1- 2002 056 102
- US-A1- 2003 097 379
- US-A1- 2005 153 650
- US-A1- 2008 271 080
- US-A1- 2009 094 642

## Description

### Field of the Invention

The present invention relates to a mobile terminal, and more particularity, to a mobile terminal and multimedia contents controlling method thereof. Although the present invention is suitable for a wide scope of applications, it is particularly suitable for controlling multimedia contents provided respectively via a plurality of broadcasting systems.

### Discussion of the Related Art

A terminal is a device that may be configured to perform various functions. Examples of such functions include data and voice communications, capturing images and video via a camera, recording audio, playing music files via a speaker system, and displaying images and video on a display. Some terminals include additional functionality that supports game playing, while other terminals are configured as multimedia players. More recently, terminals have been configured to receive broadcast and multicast signals that permit viewing of content such as videos and television programs.

Efforts are ongoing to support and increase the functionality of terminals. Such efforts include software and hardware improvements, as well as changes and improvements in the structural components that form the terminal.

Generally, a broadcast terminal is able to output a broadcast program provided on a specific broadcast channel according to broadcast relevant guide information provided by a broadcast service provider. Therefore, a user is able to view a broadcast program provided according to a broadcast schedule specified by the broadcast service provider. If a plurality of broadcast channels are available, a user selects a specific broadcast channel from a plurality of the available broadcast channels and is then able to view the selected broadcast channel.

However, according to the above mentioned related art, although a broadcast program can be played/output according to the broadcast relevant guide information provided by the broadcast service provider, a user is unable to view broadcast programs according to a contents list configured according to user's intention. EP 1850585 discloses a device with a user interface wherein a playlist is configured based on the mapping of extracted information selected by the user with broadcasting program.

Moreover, according to the above mentioned related art, even if a plurality of broadcasting systems, such as an internet broadcasting and a mobile broadcasting, are available for a broadcast terminal, a broadcast program can be output using broadcast relevant guide information on broadcast programs/broadcast channels provided by each of the broadcasting systems. Yet, broadcast relevant guide information on broadcast programs/broadcast channels provided by a plurality of broadcasting systems cannot be provided.

### SUMMARY OF THE INVENTION

Features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

In one aspect of the invention, a mobile terminal is provided as set out in claim 1.

In one aspect of the invention, a method is provided as set out in claim 10.

These and other embodiments will also become readily apparent to those skilled in the art from the following detailed description of the embodiments having reference to the attached figures, the invention not being limited to any particular embodiment disclosed.

### BRIEF DESCRIPTION OF THE DRAWINGS

The accompanying drawings, which are included to provide a further understanding of the invention and are incorporated in and constitute a part of this application, illustrate examples of the invention and together with the description serve to explain the principle of the invention. In the drawings:

FIG. 1 is a block diagram of a mobile terminal according to one embodiment of the present invention.

FIG. 2A is a front perspective diagram of a mobile terminal according to one embodiment of the present invention.

FIG. 2B is a rear perspective diagram of a mobile terminal according to one embodiment of the present invention.

FIG. 3 is a diagram to explain the concept of proximity depth of a proximity sensor.

FIG. 4A and FIG. 4B are rear perspective diagrams of a mobile terminal according to one embodiment of the present invention, in which an identity device is detachably attached to the mobile terminal.

FIG. 5 is a flowchart for a method of controlling multimedia contents in a mobile terminal according to one example of the present invention.

FIGS. 6A to 6D are diagrams of screen configurations for a method of selecting a menu item corresponding to contents list generation according to the present invention.

FIGS. 7A to 7G are diagrams of screen configurations for a method of selecting a multimedia content, which will be included in a random contents list, per content type according to the present invention.

FIGS. 8A to 8D are diagrams of screen configurations for a method of selecting a multimedia content, which will be included in a random contents list, per genre according to the present invention.

FIGS. 9A to 9D are diagrams of screen configurations for a method of selecting a multimedia content, which will be included in a random contents list, per age group according to the present invention.

FIGS. 10A to 10C are diagrams of screen configurations for a method of selecting a multimedia content, which will be included in a random contents list, per service provider recommended list according to the present invention.

FIGS. 11A to 11C are diagrams of screen configurations for a method of selecting a multimedia content, which will be included in a random contents list, per recommended list according to the present invention.

FIGS. 12A to 12E are diagrams of screen configurations for a method of selecting a multimedia content, which will be included in a sequence-designated contents list, per content type according to the present invention.

FIGS. 13A to 13I are diagrams of screen configurations for a method of selecting a multimedia content, which will be included in a time-designated contents list, per content type according to the present invention.

FIGS. 14A to 14E are diagrams of screen configurations for setting detailed conditions of a contents list according to the present invention.

FIG. 15A and FIG. 15B are diagrams of screen configurations for editing a previously generated contents list according to the present invention.

FIGS. 16A to 16C are diagrams of screen configurations for displaying a previously generated contents list according to the present invention.

FIGS. 17A to 17D are diagrams of screen configurations for switching to a user designated channel in the course of outputting a broadcast using a channel direction key according to the present invention.

FIGS. 18A to 18E are diagrams of screen configurations for switching to a user designated channel in the course of outputting a broadcast using a contents list according to the present invention.

FIG. 19 is a diagram of a screen configuration for selecting at least a current sequence content or a previously stored content as a play target content according to the present invention.

FIGS. 20A to 20D are diagrams of screen configurations of announcing a playable status of a multimedia content included in a contents list according to the present invention.

FIG. 21A and FIG. 21B are diagrams for playback or storage of a multimedia content according to a reception time and play time of the multimedia content according to the present invention.

FIG. 22A and FIG. 22B are diagrams for playback or storage of a first multimedia content or a second multimedia content according to a priority during an overlapped interval if broadcast times of the first and second multimedia contents are overlapped with each other according to the present invention.

FIGS. 23A to 23C are diagrams of screen configurations for deleting a previously stored multimedia content according to the present invention.

FIGS. 24A to 24D are diagrams of screen configurations for deleting a previously-generated contents list according to the present invention.

FIGS. 25A to 25C are diagrams of screen configurations for updating a previously-generated contents list using update information of a contents database according to the present invention.

### DETAILED DESCRIPTION

Reference will now be made in detail to the preferred embodiments of the present invention, examples of which are illustrated in the accompanying drawings. Wherever possible, the same reference numbers will be used throughout the drawings to refer to the same or like parts. The suffixes 'module' and 'unit' for the elements used in the following description are given or used in common by considering facilitation in writing this disclosure only but fail to have meanings or roles discriminated from each other.

First of all, mobile terminals described in this disclosure can include a mobile phone, a smart phone, a laptop computer, a digital broadcast terminal, a PDA (personal digital assistants), a PMP (portable multimedia player), or a navigation system. Except a case applicable to a mobile terminal only, it is apparent to those skilled in the art that the configurations according to an embodiment described in this disclosure is applicable to such a stationary terminal as a digital TV, or a desktop computer.

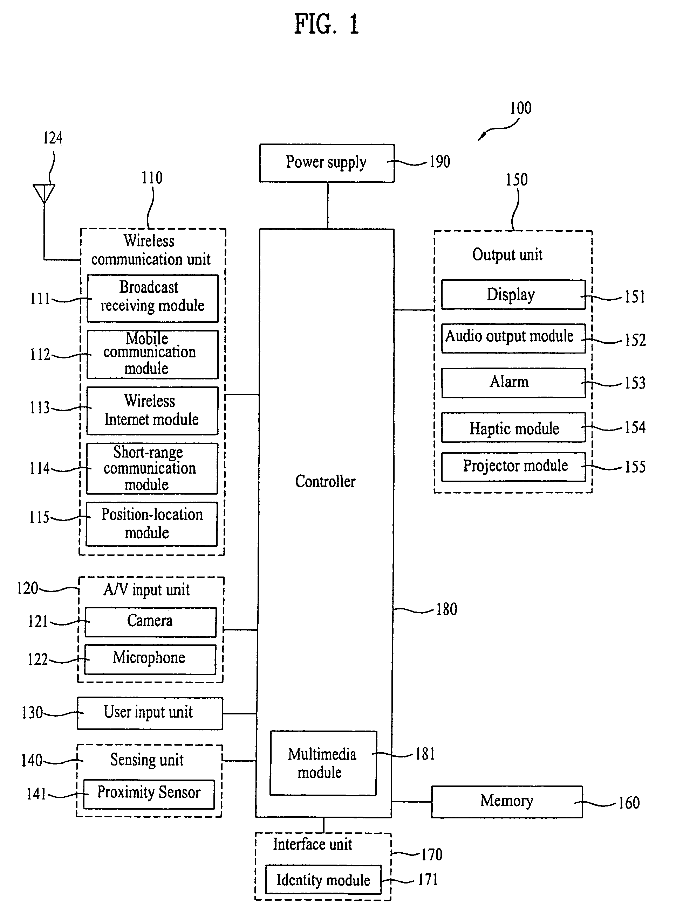

FIG. 1 is a block diagram of a mobile terminal according to one embodiment of the present invention. Referring to FIG. 1, a mobile terminal 100 according to one embodiment of the present invention includes a wireless communication unit 110, such as a broadcast receiving unit, an A/V (audio/video) input unit 120, a user input unit 130, a sensing unit 140, an output unit 150, a memory 160, an interface unit 170, a controller 180, and a power supply unit 190. FIG. 1 shows the mobile terminal 100 having various components, but it is understood that implementing all of the illustrated components is not a requirement. Greater or fewer components may alternatively be implemented.

The wireless communication unit 110 typically includes one or more components that permit wireless communication between the mobile terminal 100 and a wireless communication system or network within which the mobile terminal 100 is located. For instance, the wireless communication unit 110 can include a broadcast receiving module 111, a mobile communication module 112, a wireless Internet module 113, a short-range communication module 114, or a position-location module 115.

The broadcast receiving module 111 receives a broadcast signal and/or broadcast associated information from an external broadcast managing server via a broadcast channel. The broadcast channel may include a satellite channel and a terrestrial channel. The broadcast managing server generally refers to a server that generates and transmits a broadcast signal and/or broadcast associated information or a server that is provided with a previously generated broadcast signal and/or broadcast associated information and then transmits the provided signal or information to a terminal.

The broadcast signal may be implemented as a TV broadcast signal, a radio broadcast signal, and a data broadcast signal, among others. If desired, the broadcast signal may further include a broadcast signal combined with a TV or radio broadcast signal.

The broadcast associated information includes information associated with a broadcast channel, a broadcast program, or a broadcast service provider. The broadcast associated information can be provided via a mobile communication network. In this case, the broadcast associated information can be received by the mobile communication module 112.

The broadcast associated information can be implemented in various forms. For instance, broadcast associated information may include an electronic program guide (EPG) of digital multimedia broadcasting (DMB) and electronic service guide (ESG) of digital video broadcast-handheld (DVB-H).

The broadcast receiving module 111 may be configured to receive broadcast signals transmitted from various types of broadcast systems. By nonlimiting example, such broadcasting systems include digital multimedia broadcasting-terrestrial (DMB-T), digital multimedia broadcasting-satellite (DMB-S), digital video broadcast-handheld (DVB-H), the data broadcasting system known as media forward link only (MediaFLO@) and integrated services digital broadcast-terrestrial (ISDB-T). Optionally, the broadcast receiving module 111 can be configured to be suitable for other broadcasting systems as well as the above-explained digital broadcasting systems. The broadcast signal and/or broadcast associated information received by the broadcast receiving module 111 may be stored in a suitable device, such as a memory 160.

The mobile communication module 112 transmits/receives wireless signals to/from one or more network entities (e.g., base station, external terminal, server). Such wireless signals may represent audio, video, and data according to text/multimedia message transceivings, among others.

The wireless Internet module 113 supports Internet access for the mobile terminal 100. This module may be internally or externally coupled to the mobile terminal 100. The wireless Internet technology can include WLAN(Wireless LAN), Wireless Fidelity (Wi-Fi ®), Wireless broadband (Wibro ®), and/or Wimax ® (World Interoperability for Microwave Access), HSDPA(High Speed Downlink Packet Access).

The short-range communication module 114 facilitates relatively short-range communications. Suitable technologies for implementing this module include radio frequency identification (RFID), infrared data association (IrDA), ultra-wideband (UWB), as well as the networking technologies commonly referred to as Bluetooth ® and ZigBee ®.

The position-location module 115 identifies or otherwise obtains the location of the mobile terminal 100. If desired, this module may be implemented with a global positioning system (GPS) module.

With continuing reference to FIG. 1, the audio/video (A/V) input unit 120 is configured to provide audio or video signal input to the mobile terminal 100. As shown, the A/V input unit 120 includes a camera 121 and a microphone 122. The camera 121 receives and processes image frames of still pictures or video, which are obtained by an image sensor in a video call mode or a photographing mode. The processed image frames can be displayed on the display 151.

The image frames processed by the camera 121 can be stored in the memory 160 or can be externally transmitted via the wireless communication unit 110. Optionally, at least two cameras 121 can be provided in the mobile terminal 100 according to an environment of usage.

The microphone 122 receives an external audio signal while the portable device is in a particular mode, such as phone call mode, recording mode or voice recognition mode. This audio signal is processed and converted into electric audio data. The processed audio data is transformed into a format transmittable to a mobile communication base station via the mobile communication module 112 in case of a call mode. The microphone 122 typically includes assorted noise removing algorithms to remove noise generated in the course of receiving the external audio signal.

The user input unit 130 generates input data responsive to user manipulation of an associated input device or devices. Examples of such devices include a keypad, a dome switch, a touchpad (e.g., static pressure/capacitance), a jog wheel, or a jog switch.

The sensing unit 140 provides sensing signals for controlling operations of the mobile terminal 100 using status measurements of various aspects of the mobile terminal. For instance, the sensing unit 140 may detect an open/close status of the mobile terminal 100, relative positioning of components (e.g., a display and keypad) of the mobile terminal 100, a change of position of the mobile terminal 100 or a component of the mobile terminal 100, a presence or absence of user contact with the mobile terminal 100, or orientation or acceleration/deceleration of the mobile terminal 100. The sensing unit 140 can include a proximity sensor 141.

As an example, consider the mobile terminal 100 being configured as a slide-type mobile terminal. In this configuration, the sensing unit 140 may sense whether a sliding portion of the mobile terminal is open or closed. Other examples include the sensing unit 140 sensing the presence or absence of power provided by the power supply 190, the presence or absence of a coupling or other connection between the interface unit 170 and an external device.

The output unit 150 generates output relevant to the senses of sight, sound, and touch. The output unit 150 may include the display 151, an audio output module 152, an alarm unit 153, a haptic module 154, and a projector module 155.

The display 151 is typically implemented to visually display (output) information associated with the mobile terminal 100. For instance, if the mobile terminal is operating in a phone call mode, the display will generally provide a user interface (UI) or graphical user interface (GUI) that includes information associated with placing, conducting, and terminating a phone call. As another example, if the mobile terminal 100 is in a video call mode or a photographing mode, the display 151 may additionally or alternatively display images that are associated with these modes, the UI or the GUI.

The display 151 may be implemented using known display technologies including, for example, a liquid crystal display (LCD), a thin film transistor-liquid crystal display (TFT-LCD), an organic light-emitting diode display (OLED), a flexible display and a three-dimensional display. The mobile terminal 100 may include one or more of such displays.

Some of the above displays 151 can be implemented in a transparent or optical transmittive type, which can be named a transparent display. As a representative example for the transparent display, there is TOLED (transparent OLED). A rear configuration of the display 151 can be implemented in the optical transmittive type as well. In this configuration, a user is able to see an object on a rear surface of a terminal body via the area occupied by the display 151 of the terminal body.

At least two displays 151 can be provided in accordance with the implemented configuration of the mobile terminal 100. For instance, a plurality of displays can be arranged on a single face of the mobile terminal 100 in a manner of being spaced apart from each other or being built in one body. Alternatively, a plurality of displays can be arranged on different faces of the mobile terminal 100.

If the display 151 and a sensor for detecting a touch action (hereinafter called 'touch sensor') configure a mutual layer structure (hereinafter called 'touchscreen'), the display 151 can be used as an input device as well as an output device. In this case, the touch sensor can be configured as a touch film, a touch sheet, or a touchpad.

The touch sensor can be configured to convert a pressure applied to a specific portion of the display 151 or a variation of a capacitance generated from a specific portion of the display 151 to an electric input signal. Moreover, the touch sensor may be configured to detect a pressure of a touch as well as a touched position or size.

If a touch input is made to the touch sensor, a signal(s) corresponding to the touch is transferred to a touch controller (not shown). The touch controller processes the signal(s) and then transfers the processed signal(s) to the controller 180. Therefore, the controller 180 can determine whether a prescribed portion of the display 151 is touched.

Referring to FIG. 1, a proximity sensor 141 can be provided to an internal area of the mobile terminal 100 enclosed by the touchscreen or around the touchscreen. The proximity sensor 141 is the sensor that detects a presence or non-presence of an object approaching a prescribed detecting surface or an object existing around the proximity sensor using an electromagnetic field strength or infrared ray without mechanical contact. Hence, the proximity sensor has longer durability than a contact type sensor and also has wider utility than the contact type sensor.

The proximity sensor 141 can include a transmittive photoelectric sensor, a direct reflective photoelectric sensor, a mirror reflective photoelectric sensor, a radio frequency oscillation proximity sensor, an electrostatic capacity proximity sensor, a magnetic proximity sensor, or an infrared proximity sensor. If the touchscreen includes the electrostatic capacity proximity sensor, it is configured to detect the proximity of a pointer using a variation of electric field according to the proximity of the pointer. In this case, the touchscreen (touch sensor) can be classified as the proximity sensor 141.

In the following description, for clarity, an action that a pointer approaches without contacting with the touchscreen to be recognized as located on the touchscreen is named a 'proximity touch.' An action where a pointer actually touches the touchscreen is named a 'contact touch.' The position on the touchscreen proximity-touched by the pointer is the position of the pointer that vertically opposes the touchscreen when the pointer performs the proximity touch.

The proximity sensor 141 detects a proximity touch and a proximity touch pattern (e.g., a proximity touch distance, a proximity touch duration, a proximity touch position, or a proximity touch shift state). Information corresponding to the detected proximity touch action and the detected proximity touch pattern can be output to the touchscreen.

The audio output module 152 functions in various modes including a call-receiving mode, a call-placing mode, a recording mode, a voice recognition mode, or a broadcast reception mode to output audio data that is received from the wireless communication unit 110 or is stored in the memory 160. During operation, the audio output module 152 outputs audio relating to a particular function (e.g., call received, or message received). The audio output module 152 is often implemented using one or more speakers, buzzers, other audio producing devices, and combinations thereof.

The alarm unit 153 outputs a signal for announcing the occurrence of a particular event associated with the mobile terminal 100. Typical events include a call received event, a message received event and a touch input received event. The alarm unit 153 is able to output a signal for announcing the event occurrence by way of vibration as well as video or audio signal. The video or audio signal can be output via the display 151 or the audio output unit 152. Hence, the display 151 or the audio output module 152 can be regarded as a part of the alarm unit 153.

The haptic module 154 generates various tactile effects that can be sensed by a user. Vibration is a representative tactile effect generated by the haptic module 154. Strength and pattern of the vibration generated by the haptic module 154 are controllable. For instance, different vibrations can be output in a manner of being synthesized together or can be output in sequence.

The haptic module 154 is able to generate various tactile effects as well as the vibration. For instance, the haptic module 154 may generate the effect attributed to the arrangement of pins vertically moving against a contact skin surface, the effect attributed to the injection/suction power of air though an injection/suction hole, the effect attributed to skimming over a skin surface, the effect attributed to the contact with an electrode, the effect attributed to the electrostatic force, or the effect attributed to the representation of a hold/cold sense using an endothermic or exothermic device.

The haptic module 154 can be implemented to enable a user to sense the tactile effect through a muscle sense of a finger or arm as well as to transfer the tactile effect through a direct contact. Optionally, at least two haptic modules 154 can be provided to the mobile terminal 100 in accordance with the corresponding configuration type of the mobile terminal 100.

The projector module 155 is the element for performing an image projector function using the mobile terminal 100. The projector module 155 is able to display an image, which is identical to or partially different from the image displayed on the display 151, on an external screen or wall according to a control signal of the controller 180.

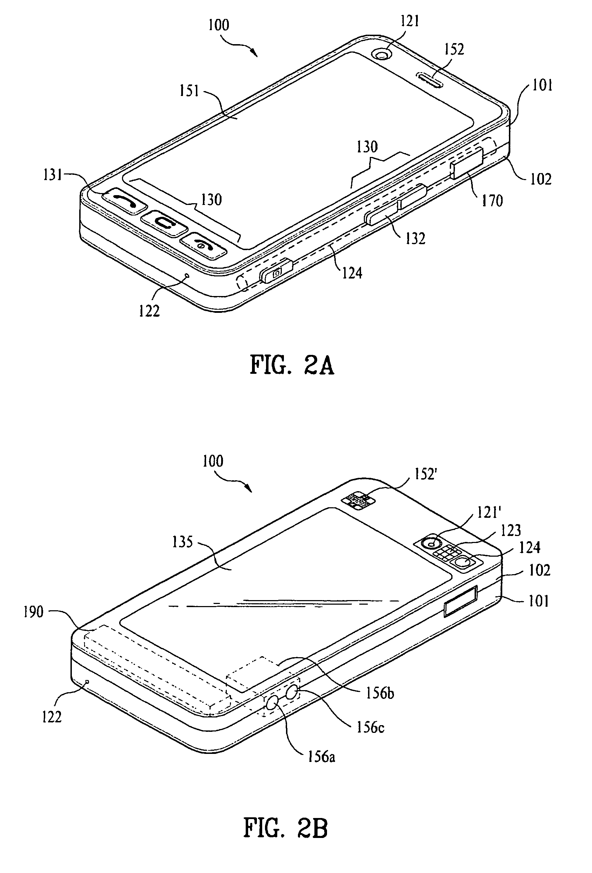

In particular, the projector module 155 can include a light source 156a (see FIG. 2b) generating light (e.g., laser) for projecting an image externally, an image producing means 156b for producing an image to output externally using the light generated from the light source, and a lens 156c for enlarging to output the image externally in a predetermined focus distance. The projector module 155 can further include a device (not shown in the drawing) for adjusting an image projected direction by mechanically moving the lens or the entire module.

The projector module 155 can be classified into a CRT (cathode ray tube) module, an LCD (liquid crystal display) module, or a DLP (digital light processing) module according to a device type of a display means. In particular, the DLP module is operated by enabling the light generated from the light source 156a to reflect on a DMD (digital micro-mirror device) chip and can be advantageous for the downsizing of the projector module 155.

Preferably, the projector module 155 can be provided in a length direction of a lateral, front or backside direction of the mobile terminal 100. And, it is understood that the projector module 155 can be provided to any portion of the mobile terminal 100 according to necessity.

The memory 160 is generally used to store various types of data to support the processing, control, and storage requirements of the mobile terminal 100. Examples of such data include program instructions for applications operating on the mobile terminal 100, contact data, phonebook data, messages, audio, still pictures, and moving pictures,. A recent use history or a cumulative use frequency of each data (e.g., use frequency for each phonebook, each message or each multimedia) can be stored in the memory 160. Moreover, data for various patterns of vibration and/or sound output in case of a touch input to the touchscreen can be stored in the memory 160.

The memory 160 may be implemented using any type or combination of suitable volatile and non-volatile memory or storage devices including hard disk, random access memory (RAM), static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disk, multimedia card micro type memory, card-type memory (e.g., SD memory, XD memory, etc.), or other similar memory or data storage device. The mobile terminal 100 may be able to operate in association with web storage for performing a storage function of the memory 160 on the Internet.

The interface unit 170 is often implemented to couple the mobile terminal 100 with external devices. The interface unit 170 receives data from the external devices or is supplied with the power and then transfers the data or power to the respective elements of the mobile terminal 100 or enables data within the mobile terminal 100 to be transferred to the external devices. The interface unit 170 may be configured using a wired/wireless headset port, an external charger port, a wired/wireless data port, a memory card port, a port for coupling to a device having an identity module, audio input/output ports, video input/output ports, or an earphone port.

The identity module 171 is a chip for storing various kinds of information for authenticating a use authority of the mobile terminal 100 and can include User identity Module (UIM), Subscriber identity Module (SIM), or Universal Subscriber identity Module (USIM). A device having the identity module (hereinafter called 'identity device') can be manufactured as a smart card. Therefore, the identity device is connectible to the mobile terminal 100 via the corresponding port.

When the mobile terminal 110 is connected to an external cradle, the interface unit 170 becomes a passage for supplying the mobile terminal 100 with power from the cradle or a passage for delivering various command signals input from the cradle by a user to the mobile terminal 100. Each of the various command signals input from the cradle or the power can operate as a signal enabling the mobile terminal 100 to recognize that it is correctly loaded in the cradle.

The controller 180 typically controls the overall operations of the mobile terminal 100. For example, the controller 180 performs the control and processing associated with voice calls, data communications, and video calls. Moreover, the controller 180 is able to perform a pattern recognizing process for recognizing a writing input and a picture drawing input carried out on the touchscreen as characters or images, respectively.

The controller 180 may include a multimedia module 181 that provides multimedia playback. The multimedia module 181 may be configured as part of the controller 180, or implemented as a separate component.

The power supply unit 190 provides power required by the various components for the mobile terminal 100. The power may be internal power, external power, or combinations thereof.

Various embodiments described herein may be implemented in a computer-readable medium using, for example, computer software, hardware, or some combination thereof. For a hardware implementation, the embodiments described herein may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a selective combination thereof. Such embodiments may also be implemented by the controller 180.

For a software implementation, the embodiments described herein may be implemented with separate software modules, such as procedures and functions, each of which perform one or more of the functions and operations described herein. The software codes can be implemented with a software application written in any suitable programming language and may be stored in memory such as the memory 160, and executed by a controller or processor, such as the controller 180.

FIG. 2A is a front perspective diagram of a mobile terminal 100 according to one embodiment of the present invention. The mobile terminal 100 shown in the drawing has a bar-type terminal body. Yet, the mobile terminal 100 may be implemented in a variety of different configurations. Examples of such configurations include folder-type, slide-type, rotational-type, swing-type and combinations thereof. For clarity, further disclosure will primarily relate to a bar-type mobile terminal 100. However such teachings apply equally to other types of mobile terminals.

Referring to FIG. 2A, the mobile terminal 100 includes a case (casing, housing, cover) configuring its exterior. In the present embodiment, the case can be divided into a front case 101 and a rear case 102. Various electric/electronic parts are loaded in a space provided between the front and rear cases 101 and 102. Optionally, at least one middle case can be additionally provided between the front and rear cases 101 and 102. The cases 101 and 102 may be formed by injection molding of synthetic resin or can be formed of metal substance such as stainless steel (CRES), titanium (Ti) or the like for example.

A display 151, a first audio output unit 152, a first camera 121, user input units 130/131 and 132, a microphone 122, and an interface unit 170 can be provided to the terminal body, and more particularly, to the front case 101. The display 151 occupies most of a main face of the front case 101.

The audio output unit 152 and the first camera 121 are provided to an area adjacent to one of two end portions of the display 151, while the user input unit 131 and the microphone 122 are provided to another area adjacent to the other end portion of the display 151. The user input unit 132 and the interface unit 170 can be provided to lateral sides of the front and rear cases 101 and 102.

The input unit 130 includes a plurality of manipulating units 131 and 132 that can be manipulated to receive a command for controlling an operation of the terminal 100. The manipulating units 131 and 132 can be named a manipulating portion and may adopt any mechanism of a tactile manner that enables a user to perform a manipulation action by experiencing a tactile feeling.

Content input by the first or second manipulating unit 131 or 132 can be diversely set. For instance, such a command as start, end, or scroll is input via the first manipulating unit 131. A command for a volume adjustment of sound output from the first audio output unit 152 or a command for a switching to a touch recognizing mode of the display 151 can be input via the second manipulating unit 132.

FIG. 2B is a perspective diagram of a backside of the terminal shown in FIG. 2A. Referring to FIG. 2B, a second camera 121' can be provided at a backside of the terminal body, and more particularly, on the rear case 102. The second camera 121' has a photographing direction that is substantially opposite to that of the first camera 121 shown in FIG. 2A and may have a pixel density differing from that of the first camera 121.

For example, the first camera 121 has a low pixel density for capturing and transmitting a picture of a user's face for a video call, while the second camera 121' has a higher pixel density for capturing a general subject for photography without transmitting the captured subject. Each of the first and second cameras 121 and 121' can be installed on the terminal body to be rotated or popped up.

A flash 123 and a mirror 124 are additionally provided adjacent to the second camera 121'. The flash 123 projects light toward a subject in case of photographing the subject using the second camera 121'. In case that a user attempts to take a picture of the himself/herself (self-photography) using the second camera 121', the mirror 124 enables the user to view his/her face reflected by the mirror 124.

A second audio output unit 152' can be provided to the backside of the terminal body. The second audio output unit 152' is able to implement a stereo function together with the first audio output unit 152 shown in FIG. 2A and may be used for implementation of a speakerphone mode in talking over the terminal.

A broadcast signal receiving antenna 124 can be additionally provided to the lateral side of the terminal body as well as an antenna for communication (not shown). The antenna 124, which is a portion of the broadcast receiving module 111 shown in FIG. 1, can be retractably provided to the terminal body.

A power supply unit 190 for supplying a power to the terminal 100 is provided to the terminal body. And, the power supply unit 190 can be configured to be built within the terminal body. Alternatively, the power supply unit 190 can be configured to be detachably connected to the terminal body.

A touchpad 135 for detecting a touch can be additionally provided to the rear case 102. The touchpad 135 can be configured as a light transmittive type like the display 151. In this case, the display 151 configured to output visual information from both faces is able to recognize the visual information via the touchpad 135 as well. The information output from both of the faces can be entirely controlled by the touchpad 135. Alternatively, a display is further provided to the touchpad 135 so that a touchscreen can be provided to the rear case 102 as well.

The touchpad 135 is activated by interconnecting with the display 151 of the front case 101. The touchpad 135 can be provided at the rear of the display 151 and in parallel. The touchpad 135 can have a size equal to or smaller than that of the display 151.

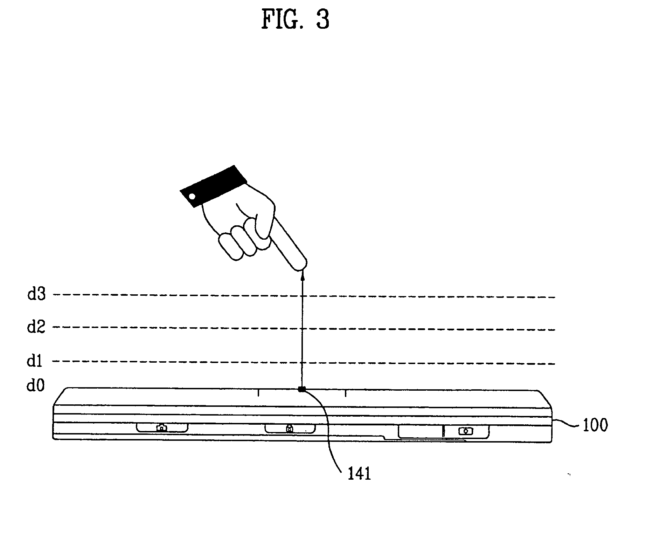

The proximity sensor 141 described with reference to FIG. 1 is explained in detail with reference to FIG. 3 as follows. FIG. 3 is a conceptional diagram for explaining a proximity depth of a proximity sensor. Referring to FIG. 3, when a pointer such as a user's finger or a pen approaches the touchscreen, the proximity sensor 141 provided within or in the vicinity of the touchscreen detects the approach of the pointer and then outputs a proximity signal. The proximity sensor 141 can be configured to output a different proximity signal according to a distance between the pointer and the proximity-touched touchscreen (hereinafter named 'proximity depth').

In FIG. 3, exemplarily shown is a cross-section of the touchscreen provided with a proximity sensor 141 capable to three proximity depths. It is understood that a proximity sensor capable of proximity depths smaller than 3 or equal to or greater than 4 is possible.

In detail, if the pointer is fully contacted with the touchscreen (d0), it is recognized as a contact touch. If the pointer is spaced apart from the touchscreen a distance smaller than d1, it is recognized as a proximity touch to a first proximity depth. If the pointer is spaced apart from the touchscreen a distance smaller than D2 or equal to or greater than D1, it is recognized as a proximity touch to a second proximity depth. If the pointer is spaced apart from the touchscreen a distance smaller than d3 or equal to or greater than d2, it is recognized as a proximity touch to a third proximity depth. If the pointer is spaced apart from the touchscreen a distance equal to or greater than d3, no proximity touch is recognized.

Hence, the controller 180 is able to recognize the proximity touch as one of various input signals according to the proximity depth and position of the pointer. The controller 180 is able to perform various operation controls according to the various input signals.

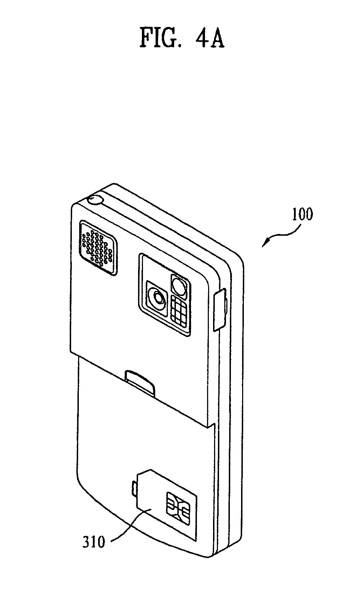

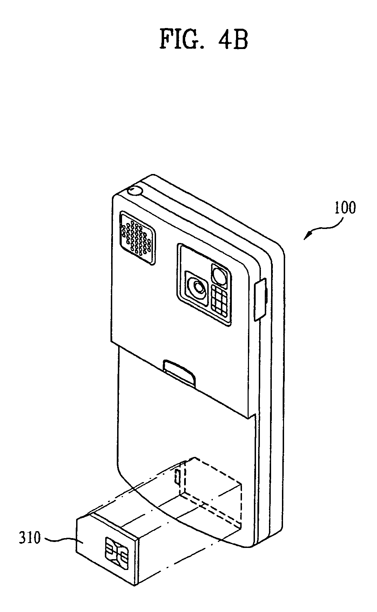

FIG. 4A and FIG. 4B are backside perspective diagrams of a mobile terminal 100 according to one embodiment of the present invention, in which an identity device 310 is detached/attached to/from the mobile terminal. The identity device can include a SIM card, for example.

Referring to FIG. 4A and FIG. 4B, the identity device 310 is configured to be detachable from the terminal 100. Therefore, an old identity device can be replaced by a new identity device to be loaded in the terminal 100. Of course, the identity device 310 can be loaded in the terminal 100 by being combined with the interface unit 170. Alternatively, the identity device 310 can be loaded in the terminal 100 by being connected to a connector separately provided for the assembly to the identity device 310. A connecting means (not shown in the drawing) for connecting the identity device 310 to the terminal 100 can be provided to any place of the terminal, such as a backside, a lateral side, or a front side.

A mobile terminal as described in this disclosure can include at least one of the elements shown in FIG. 1. Multimedia contents described in this disclosure are the data including audio and video signals and can include a real-time/non-real-time mobile broadcast content provided on a mobile broadcast channel, a real-time/non-real-time Internet broadcast content provided on an Internet broadcast channel, and/or a multimedia clip file provided via the Internet.

In particular, the real-time/non-real-time Internet broadcast content may include a content provided according to a broadcast time designated to the corresponding content and the real-time/non-real-time Internet broadcast content may include a content playable by being downloaded to the terminal 100 at a timing point specified by a user without a previously designated broadcast time.

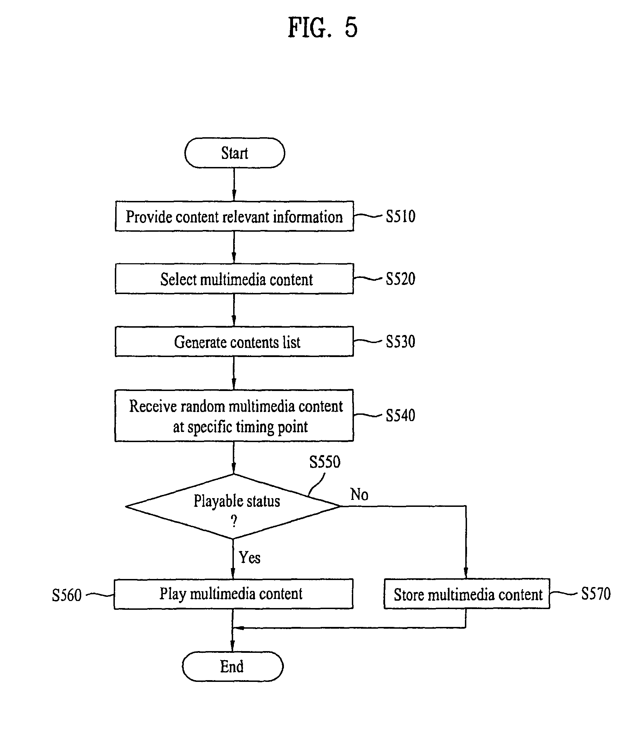

In the following description, a method of controlling multimedia contents in a mobile terminal according to the present invention is explained in detail with reference to FIG. 5. FIG. 5 is a flowchart for a method of controlling multimedia contents in a mobile terminal 100 according to one example of the present invention.

Referring to FIG. 5, the mobile terminal 100 is provided with information (hereinafter named 'content relevant information') on multimedia contents via the wireless communication unit 110, such as a broadcast receiving unit (S510). The content relevant information is the information required for reception and playback of content. The content relevant information can include multimedia content identification information (name, series number, content ID, or identification number), a multimedia content providing website address (particularly, in case of an Internet broadcast content or a multimedia clip file), broadcast time information of a multimedia content (particularly, in case of a real-time broadcast content), synopsis information of a multimedia content, performer information of a multimedia content, genre information of a multimedia content, viewable age restriction information of a multimedia content, preference information of a multimedia content, and/or pay/free view information of a multimedia content.

In case of a real-time/non-real-time mobile broadcast content, the content relevant information includes broadcast relevant information of an electronic program guide type, an electronic service guide type or a service guide type. In case of a real-time/non-real-time Internet broadcast content, the content relevant information includes Internet broadcast guide information. In case of a multimedia clip file, the content relevant information can include an Internet address.

In the providing step S510, the content relevant information can be provided by periods or at a random timing point. In this case, the period or the random timing point can be set by the mobile terminal 100 or a content relevant information providing server (not shown in the drawing). The content relevant information can be provided if it is requested by the mobile terminal 100. Moreover, the content relevant information can be unilaterally provided by the content relevant information providing server.

In the providing step S510, the content relevant information can be downloaded (or received) from the content relevant information providing server. The content relevant information can be checked without a separate download in a manner of accessing a website operated by the content relevant information providing server. Moreover, the downloaded content relevant information is stored in the memory 160. The content relevant information checked through the website can be received and stored by the mobile terminal 100 according to a selection made by a user.

The mobile terminal 100 enables a user to select at least one multimedia content via the user input unit 130 using the provided content relevant information (S520). For instance, a user is able to select a multimedia content, which will be included in a contents list (explained later), using the content relevant information displayed through the display 151.

Subsequently, the mobile terminal 100 generates a contents list including the at least one multimedia content selected in the selecting step S520 under the control of the controller 180 (S530). The generated contents list is operable as a broadcast organization list of a broadcast channel (hereinafter named a user designated channel) specified by a user, which is separate from other broadcast channels provided by a broadcasting service provider. Therefore, if a user designated channel is selected from broadcast channels selectable in broadcast mode, the mobile terminal 100 is able to play back a prescribed one of the at least one or more multimedia contents included in the contents list corresponding to the user designated channel.

In the generating step S530, the mobile terminal 100 is able to generate a plurality of contents lists from which the mobile terminal is able to perform a content play operation according to a specific contents list selected by a user from a plurality of the generated contents lists. For instance, a plurality of contents lists may be generated according to various conditions including a condition per genre, a condition per content type, a condition per viewable age, a condition per age, and/or a user designated condition. The generated contents list can be stored in the memory 160 under the control of the controller 180.

The selecting step S520 and the generating step S530 are further explained in detail with reference to the accompanying drawings. For a user designated channel mentioned in the following description, a broadcast organization list is set to a contents list generated by the present invention.

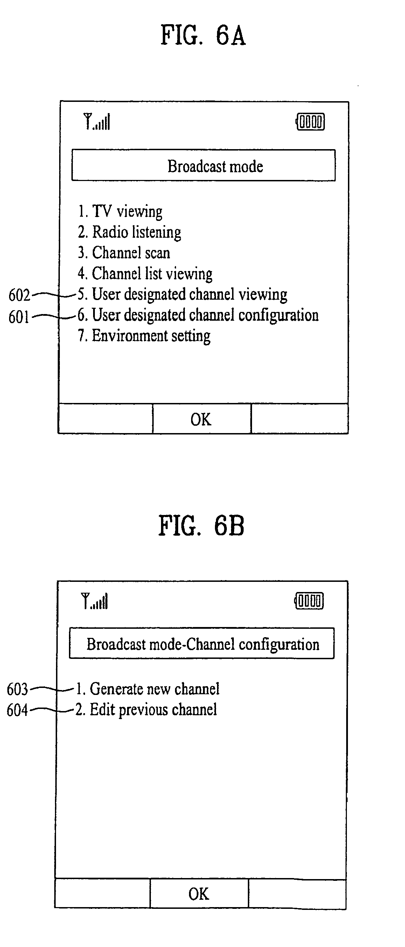

FIGS. 6A to 6D are diagrams of screen configurations for a method of selecting a menu item corresponding to a contents list generated according to the present invention. If the mobile terminal 100 enters a broadcast mode relevant menu through a menu search or a manipulation of a corresponding key (or a key region), the mobile terminal 100 is able to display a list (hereinafter named a menu list) constructed with menu items relevant to a broadcast mode through a display 151 (FIG. 6A). For instance, the menu items relevant to the broadcast mode can include a TV viewing, a radio listening, a channel scan, a channel list viewing, a user designated channel viewing, a user designated channel configuration, and/or an environment setting.

If a menu item 601 of the user designated channel configuration is selected from the broadcast menu list shown in FIG. 6A, the mobile terminal 100 is able to display a picture for enabling a user designated channel configuration form to be selected (FIG. 6B). For instance, the user designated channel configuration form can include a new channel generation 603 and a previous channel editing 604.

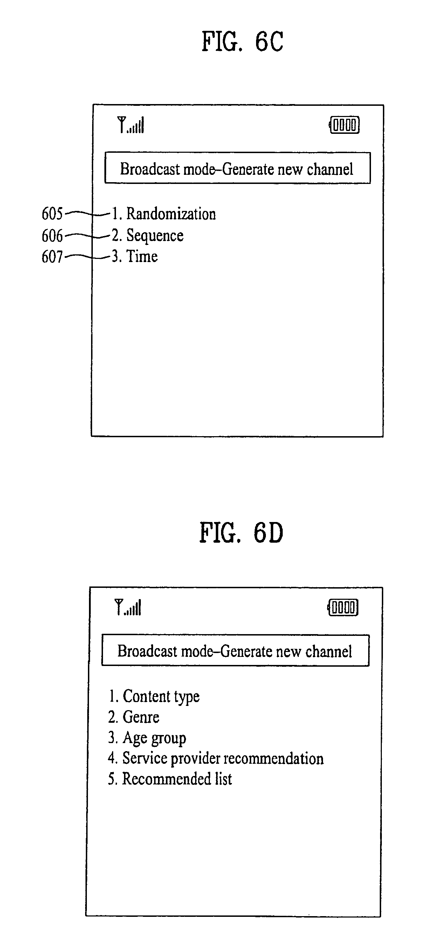

If the new channel generation 603 is selected as the user designated channel configuration form in FIG. 6B, the mobile terminal 100 is able to display a picture for enabling a user to select a condition for a user designated channel that will be newly generated (FIG. 6C). In this case, the condition for the user designated channel may mean a playback condition set for a multimedia content included in a contents list that will operate as a broadcast organization list of a user designated channel.

For instance, the condition for the user designated channel can include an unconditional randomization 605, a per-multimedia content play sequence 606 or a per-multimedia content play time 607. In particular, the following description is made on the assumption that a user designated channel is selected as an output target channel in a broadcast output mode. For instance, a broadcast output mode can be entered if the menu item 603 of 'TV viewing' is selected in FIG. 6B.

If the condition for the user designated channel is set to 'randomization' 605, the mobile terminal 100 is able to play back a multimedia content randomly selected from the at least one or more multimedia contents included in the contents list by a user or terminal using the multimedia module 181. If the condition for the user designated channel is set to 'sequence' 606, the mobile terminal 100 is able to sequentially play back the at least one or more multimedia contents included in the contents list according to the play sequence using the multimedia module 181. If the condition for the user designated channel is set to 'time' 607, the mobile terminal 100 is able to sequentially play back a multimedia content designated to be played back at a corresponding play time among the at least one or more multimedia contents included in the contents list using the multimedia module 181.

If 'generate new channel' 603 is selected as the user designated channel configuration form in FIG. 6B, the mobile terminal 100 is able to set a selectable status of a multimedia content that will be included in the contents list that will be newly generated. For example, the mobile terminal 100 is able to display a configuration condition list including conditions for providing the content relevant information provided by a multimedia contents database in order to enable content relevant information corresponding to a specific providing condition to be provided by the multimedia contents database. Hence, in the providing step S510, the mobile terminal 100 can be provided with the content relevant information corresponding to a specific providing condition by the multimedia contents database.

The information relevant to a multimedia content, which can be provided to the terminal 100, is stored in the multimedia contents database. The multimedia contents database is then able to provide the terminal 100 with the content relevant information corresponding to at least one providing condition.

For instance, the providing condition can include at least one of a content type, an age group, a viewable age, a day of the week, a date, a content preference, or a service provider recommended content. Meanwhile, if a separate key (or a key region) for receiving an input of a user designated channel configuration command is selected, the terminal 100 is able to directly display the user designated channel configuration relevant picture shown in FIG. 6B without performing a menu searching process repeatedly.

In the following description, a process for selecting a multimedia content in generating a random contents list generation is explained in detail. In particular, the mobile terminal 100 is able to perform a random contents list generating process, which will be explained later, if 'randomization' 605 is selected for a user designated channel in FIG. 6C.

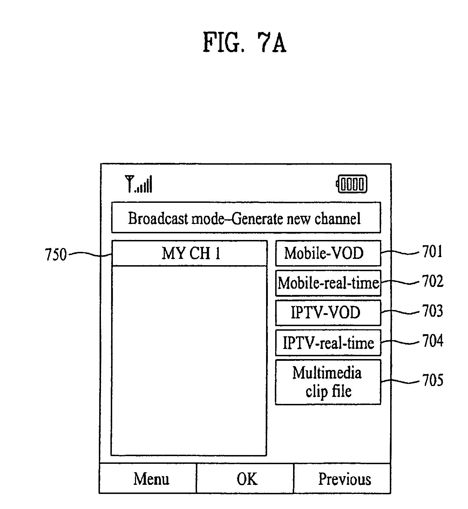

FIGS. 7A to 7G are diagrams of screen configurations for a method of selecting a multimedia content, which will be included in a random contents list, per content type according to the present invention. If 'content type' is selected from the configuration condition list shown in FIG. 6D, the mobile terminal 100 is able to display content type regions 701 to 705 to receive an input for a per-content type content relevant information providing command, as illustrated in FIG. 7A.

For instance, the content type can include a non-real-time mobile broadcast content (Mobile-VOD) 701, a real-time mobile broadcast content (Mobile-real-time) 702, a non-real-time Internet broadcast content (IPTV-VOD) 703, a real-time Internet broadcast content (IPTV-real-time) 704, and/or a multimedia clip file 705. Moreover, in FIG. 7A, the mobile terminal 100 is able to display a region (hereinafter named an identification information display region) 750 for displaying identification information of a multimedia content, which will be included in a future-generated contents list, on one region of a screen.

If a specific content type is selected in FIG. 7A, the mobile terminal 100 is able to check content relevant information corresponding to the selected specific content type in a manner of downloading content relevant information corresponding to the selected specific content type from a multimedia contents database, searching previously stored content relevant information for content relevant information corresponding to the selected content type, or accessing a website provided by the multimedia contents database, in order to be provided with the content relevant information corresponding to the selected specific content type. In this case, the content relevant information corresponding to the specific content type may be the relevant information on a multimedia content for which a specific content type is set.

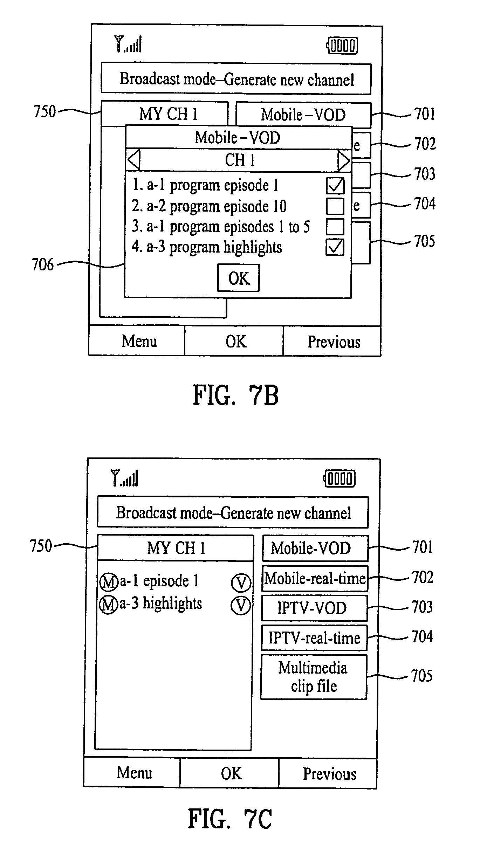

If the 'Mobile-VOD' 705 is selected in FIG. 7A, the mobile terminal 100 is able to display relevant information 706 on non-real-time mobile broadcast contents (e.g., per-broadcast channel broadcast content providing information, and broadcast content names/series numbers/play time information), as illustrated in FIG. 7B. If a specific non-real-time mobile broadcast content is selected using the content relevant information 706 shown in FIG. 7B, the mobile terminal 100 is able to display identification information of the selected specific non-real-time mobile broadcast content on the identification information display region 750, as illustrated in FIG. 7C.

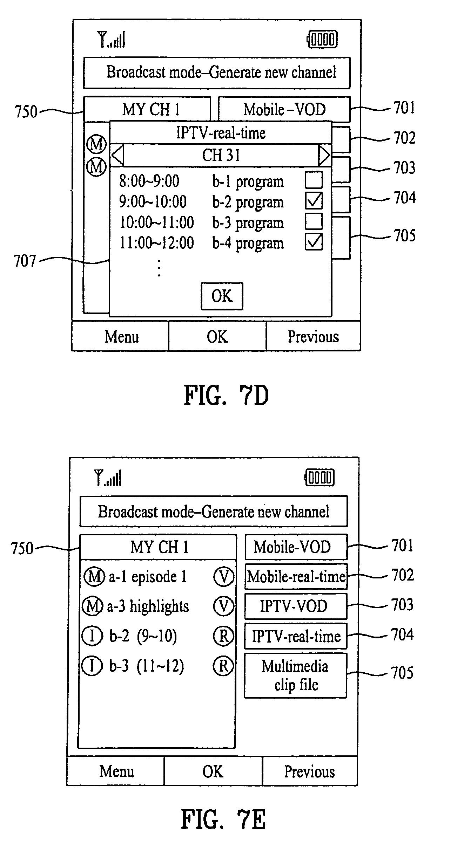

If the 'IPTV-real-time' 704 is selected in FIG. 7C, the mobile terminal 100 is able to display relevant information 707 of real-time Internet broadcast contents (e.g., per-broadcast channel broadcast contents organization information according to a broadcast time, and broadcast content names/series numbers/broadcast time information), as illustrated in FIG. 7D. If a specific real-time Internet broadcast content is selected using the relevant information 707 shown in FIG. 7D, the mobile terminal 100 is able to display identification information of the selected specific real-time Internet broadcast content on the identification information display region 750, as illustrated in FIG. 7E.

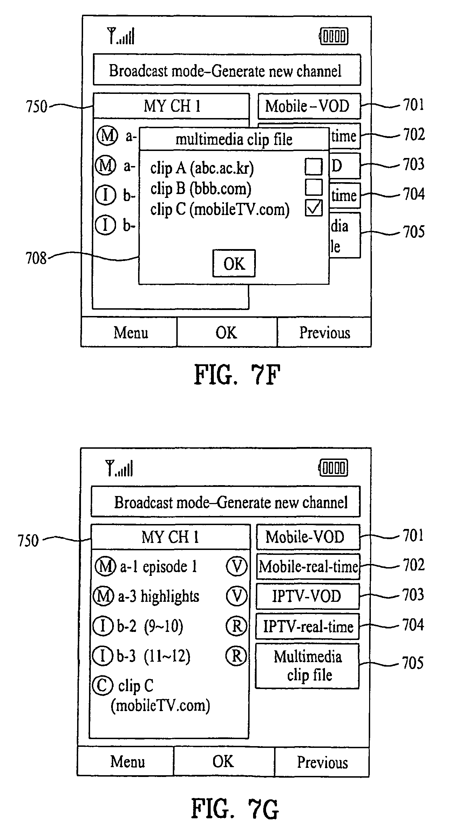

If the 'multimedia clip file' 705 is selected in FIG. 7E, the mobile terminal 100 is able to display relevant information 708 on multimedia clip files provided via Internet (e.g., multimedia clip file names/providing website addresses/identification information), as illustrated in FIG. 7F. If a specific multimedia clip file is selected using the relevant information 708 shown in FIG. 7F, the mobile terminal 100 is able to display identification information of the selected specific multimedia clip file on the identification information display region 750, as illustrated in FIG. 7G.

As mentioned in the above description, if the content selecting process is completed, one contents list including a multimedia content corresponding to content identification information displayed on the identification information display region 750 can be generated. In order to correspond to a corresponding multimedia content type, one of a mobile content identifier (M), an Internet content identifier (I) and a clip file identifier (C) can be displayed on each content identification information displayed on the identification information display region 750. And, either a real-time content identifier (R) or a non-real-time content identifier (V) can be displayed on the corresponding identification content identification information.

If the 'Mobile-real-time' 702 or the 'IPTV-VOD' 703 is selected, the mobile terminal 100 can enable a user to select a multimedia content, which will be included in a contents list, using the relevant information on the real-time mobile broadcast contents or the relevant information on the non-real-time Internet broadcast contents. As mentioned in the foregoing description, the content relevant information can be provided in a manner of accessing each content type. Yet, if the 'content type' is selected in FIG. 6D, the mobile terminal 100 is able to display content relevant information corresponding to all content types on one picture.

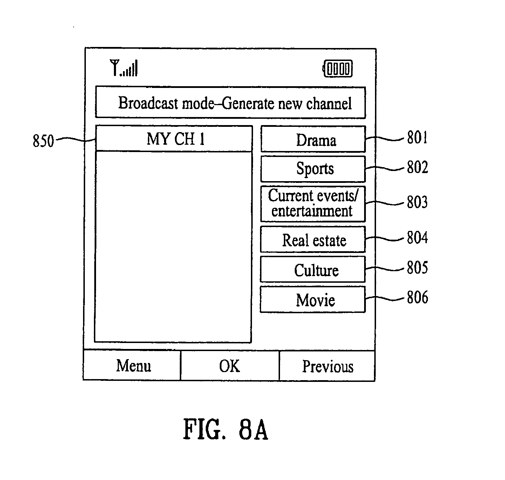

FIGS. 8A to 8D are diagrams of screen configurations for a method of selecting a multimedia content, which will be included in a random contents list, per genre according to the present invention. If the 'genre' is selected from the configuration condition list shown in FIG. 6D, the mobile terminal 100 is able to display an identification information display region 850 and a plurality of genre regions 801 to 806 to receive an input of a per-genre content relevant information providing command, as illustrated in FIG. 8A. For instance, the genre can include drama 801, sports 802, current events/entertainment 803, real estate 804, culture 805, and/or movie 806.

If a specific genre is selected in FIG. 8A, the mobile terminal 100 is able to check content relevant information corresponding to the selected specific genre in a manner of downloading content relevant information corresponding to the selected specific genre from a multimedia contents database, searching previously stored content relevant information for content relevant information corresponding to the selected genre or accessing a website provided by the multimedia contents database, in order to be provided with the content relevant information corresponding to the selected specific genre. In this case, the content relevant information corresponding to the specific genre may be the relevant information on a multimedia content for which a specific genre is set.

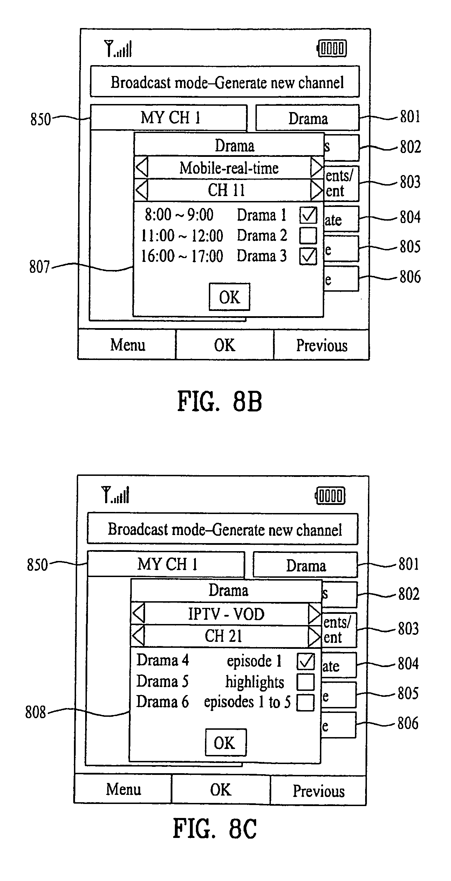

If 'drama' 801 is selected in FIG. 8A, the mobile terminal 100 is able to display content relevant information 807, as illustrated in FIG. 8B, or 808, as illustrated in FIG. 8C (e.g., per-broadcast channel broadcast content organization information, and/or broadcast content names/series numbers/broadcast time information_real-time/play time information_non-real-time) corresponding to dramas. In providing content relevant information corresponding to a drama, the mobile terminal 100 is able to provide the relevant information per content type or per broadcast channel according to a selection made by a user, as illustrated in FIG. 8B or 8C.

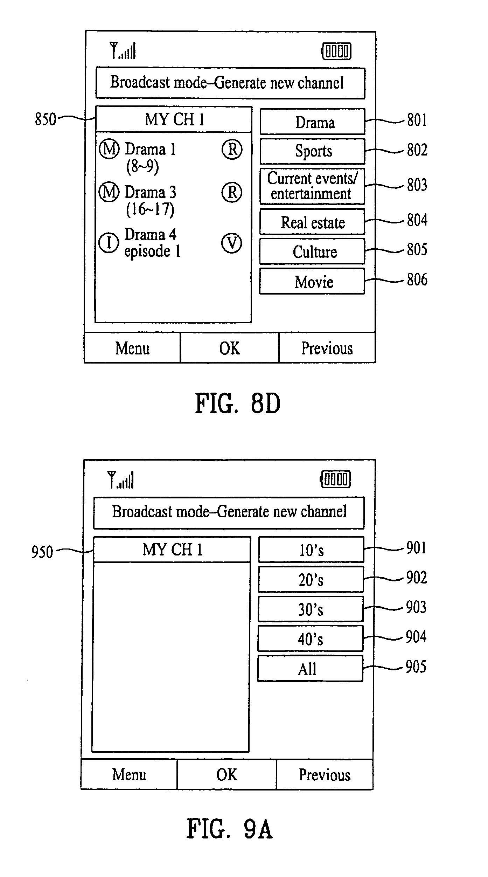

If a specific multimedia content is selected using the content relevant information 807 or 808 shown in FIG. 8B or 8C, the mobile terminal 100 is able to display identification information of the selected specific multimedia content on an identification information display region 850, as illustrated in FIG. 8D. As mentioned in the above description, if the multimedia content selecting process is completed, the mobile terminal 100 is able to generate one contents list including the multimedia content corresponding to the content identification information displayed on the identification information display region 850. Meanwhile, the mobile terminal 100 enables a user to select one of other genres 802 to 806 as well as 'drama' 801, provides the content relevant information corresponding to the selected genre, and then enables the user to select a multimedia content, which will be included in a contents list, using the provided content relevant information.

As mentioned in the foregoing description, the content relevant information can be provided by accessing per genre. If 'genre' is selected in FIG. 6D, the mobile terminal 100 is able to display the content relevant information corresponding to all genres on one picture.

FIGS. 9A to 9D are diagrams of screen configurations for a method of selecting a multimedia content, which will be included in a random contents list, per age group according to the present invention. If the 'age group' is selected from the configuration condition list shown in FIG. 6D, the mobile terminal 100 is able to display an identification information display region 950 and age group regions 901 to 905 for receiving an input of a per-age group content relevant information providing command, as illustrated in FIG. 9A. For instance, the age groups can include a 10's age group 901, a 20's age group 902, a 30's age group 903, a 40's age group 904 and an all age group 905.

If a specific age group is selected in FIG. 9A, the mobile terminal 100 is able to check content relevant information corresponding to the selected specific age group in a manner of downloading content relevant information corresponding to the selected specific age group from a multimedia contents database, searching previously stored content relevant information for content relevant information corresponding to the selected age group or accessing a website provided by the multimedia contents database, in order to be provided with the content relevant information corresponding to the selected specific age group. In this case, the content relevant information corresponding to the specific age group may be the relevant information on a multimedia content, of which a viewing is recommended for a specific age group or which has a good program rating.

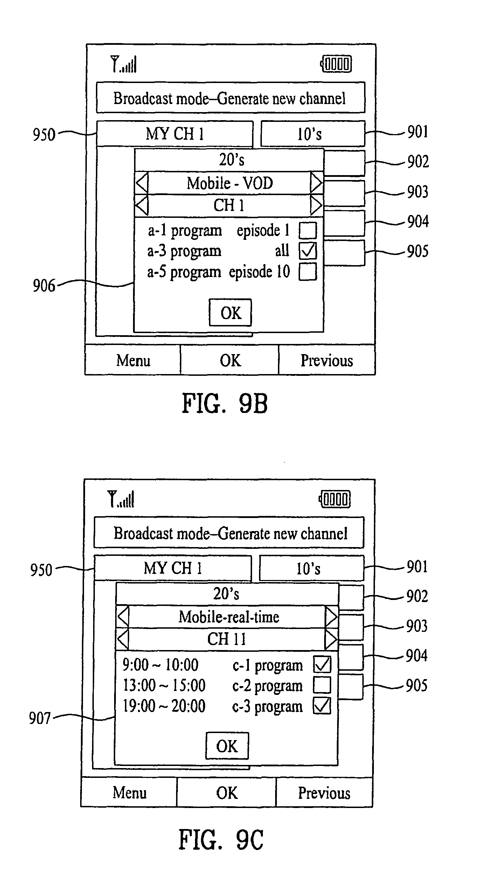

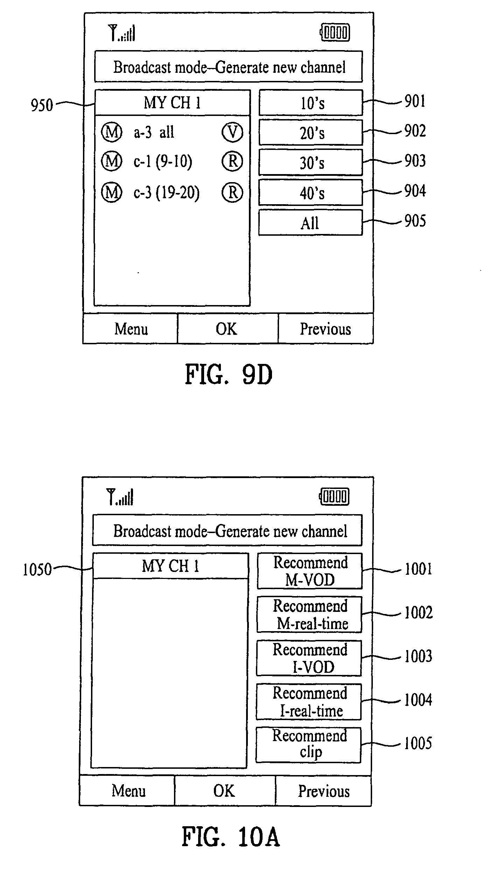

If the '20's' age group 902 is selected in FIG. 9A, the mobile terminal 100 is able to display content relevant information 906, as illustrated in FIG. 9B, or 907, as illustrated in FIG. 9C (e.g., per-broadcast channel broadcast content organization information, and/or broadcast content names/series numbers/broadcast time information_real-time/play time information_non-real-time) corresponding to the 20's age group. In providing content relevant information corresponding to the '20's' age group 902, the mobile terminal 100 is able to provide the information per content type or per broadcast channel according to a selection made by a user, as illustrated in FIGS. 9B and 9C. If a specific multimedia content is selected using the content relevant information 906 or 907 shown in FIGS. 9B or 9C, the mobile terminal 100 is able to display identification information of the selected specific multimedia content on an identification information display region 950, as illustrated in FIG. 9D.

As mentioned in the above description, if the multimedia content selecting process is completed, the mobile terminal 100 is able to generate one contents list including the multimedia content corresponding to the content identification information displayed on the identification information display region 950. Meanwhile, the mobile terminal 100 enables a user to select one of other age groups 901, 903, 904 and 905 as well as the 20's age group 902, provides the content relevant information corresponding to the selected age group, and then enables the user to select a multimedia content, which will be included in a contents list, using the provided content relevant information.

As mentioned in the foregoing description, the content relevant information can be provided by accessing per age group. If the 'age group' is selected in FIG. 6D, the mobile terminal 100 is able to display the content relevant information corresponding to all age groups on one picture.

FIGS. 10A to 10C are diagrams of screen configurations for a method of selecting a multimedia content, which will be included in a random contents list, per service provider recommended list according to the present invention. If the 'service provider recommendation' is selected from the configuration condition list shown in FIG. 6D, the mobile terminal 100 is able to display an identification information display region 1050 and regions 1001 to 1005 for receiving an input of a content relevant information providing command for a service provider recommended content, as illustrated in FIG. 10A.

For instance, the service provider recommended content can be provided per content type. Hence, the regions 1001 to 1005 are provided per content type.

If a specific content type is selected in FIG. 10A, in order to be provided with content relevant information (hereinafter named recommended content relevant information) corresponding to the selected specific content type, the mobile terminal 100 is able to check content relevant information corresponding to the selected content type in a manner of downloading recommended content relevant information corresponding to the selected specific content type from a multimedia contents database, searching previously stored content relevant information for recommended content relevant information corresponding to the selected specific content type or accessing a website provided by the multimedia contents database. In this case, the content relevant information corresponding to the specific age group may be the relevant information on a multimedia content, of which a viewing is recommended for a specific age group or which has a good program rating.

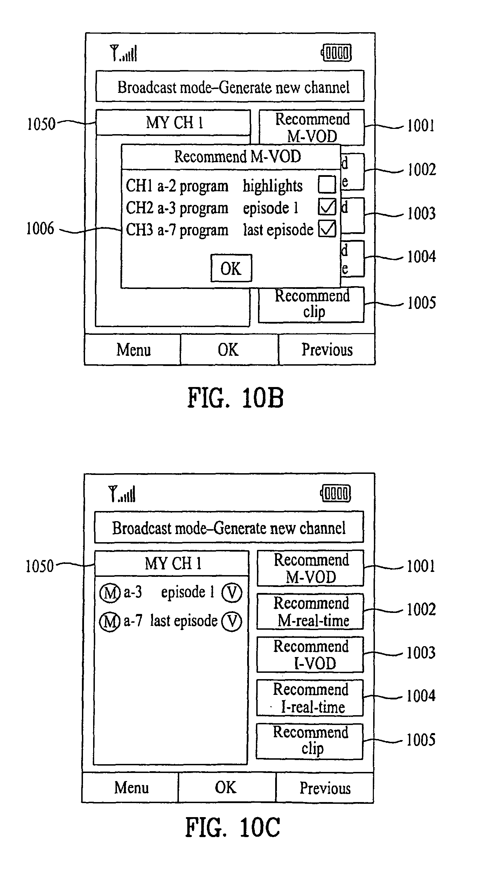

If the recommended non-real-time mobile broadcast content 'M-VOD' 1001 is selected in FIG. 10A, the mobile terminal 100 is able to display the recommended content relevant information 1006 on a content recommended by a service provider among non-real-time mobile broadcast contents, as illustrated in FIG. 10B. If a specific multimedia content is selected using the content relevant information 1006 shown in FIG. 10B, the mobile terminal 100 is able to display identification information of the selected specific multimedia content on an identification information display region 1050, as illustrated in FIG. 10C.

As mentioned in the above description, if the multimedia content selecting process is completed, the mobile terminal 100 is able to generate one contents list including the multimedia content corresponding to the content identification information displayed on the identification information display region 1050. As mentioned in the foregoing description, the recommended content relevant information can be provided by accessing per content type. Yet, if the 'service provider recommendation' is selected in FIG. 6D, the mobile terminal 100 is able to display all recommended content relevant informations on one picture.

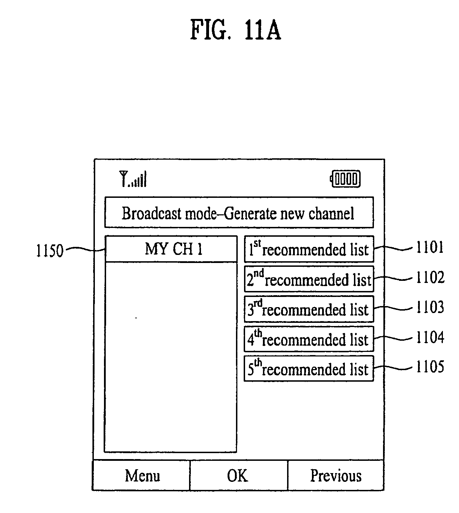

FIGS. 11A to 11C are diagrams of screen configurations for a method of selecting a multimedia content, which will be included in a random contents list, per recommended list according to the present invention. If the 'recommended list' is selected from the configuration condition list shown in FIG. 6D, the mobile terminal 100 is able to display an identification information display region 1150 and regions 1101 to 1105 for receiving an input of a content relevant information providing command for the recommended list, as illustrated in FIG. 11A.

For instance, the recommended list can be a contents list recommended by a service provider who provides multimedia contents. If a specific recommended list is selected in FIG. 11A, in order to be provided with content relevant information corresponding to the selected specific recommended list, the mobile terminal 100 is able to check content relevant information corresponding to the selected recommended list in a manner of downloading content relevant information corresponding to the selected specific recommended list from a multimedia contents database, searching previously stored content relevant information for content relevant information corresponding to the selected specific recommended list or accessing a website provided by the multimedia contents database.

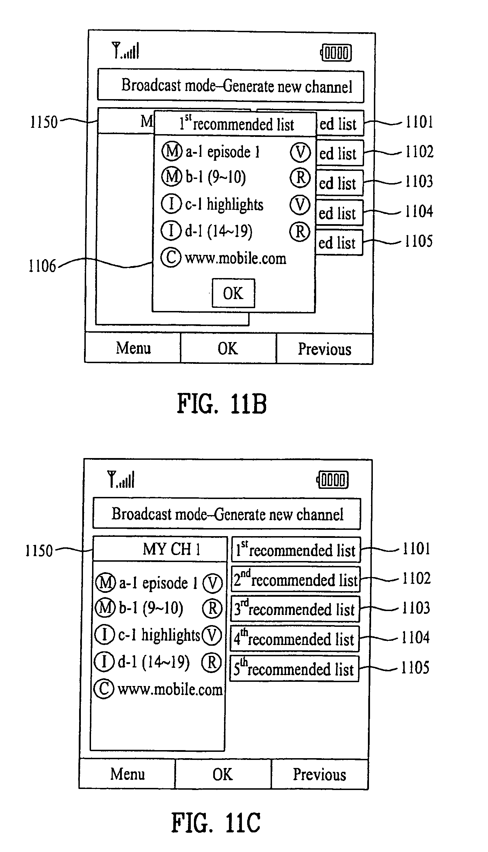

If a '1^{st} recommended list' 1101 is selected in FIG. 11A, the mobile terminal 100 is able to display the content relevant information 1106 corresponding to the 1^{st} recommended list, as illustrated in FIG. 11B. If an 'OK' key is selected in FIG. 11B, the mobile terminal 100 is able to display content relevant information corresponding to the first recommended list on the identification information display region 1150, as illustrated in FIG. 11C. In particular, the 1^{st} recommended list itself can include a contents list.

As mentioned in the foregoing description, the content relevant information can be provided per recommended list. Yet, if the 'recommended list' is selected in FIG. 6D, the mobile terminal 100 is able to display all recommended lists on one picture.

In the following description, a process for selecting a multimedia content in generating a sequence designated contents list is explained in detail. In particular, if the 'sequence' 606 is selected as a condition for a user designated channel in FIG. 6C, the mobile terminal is able to perform a sequence designated contents list generating process.

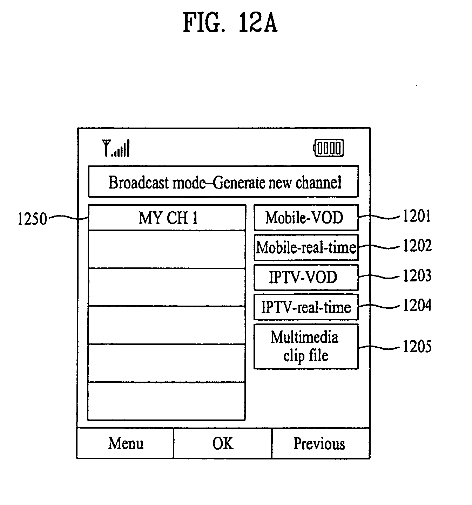

FIGS. 12A to 12E are diagrams of screen configurations for a method of selecting a multimedia content, which will be included in a sequence designated contents list, per content type according to the present invention. If a 'content type' is selected from the configuration condition list shown in FIG. 6D, the mobile terminal 100 is able to display a plurality of content type regions 1201 to 1205 to receive an input of a content relevant information providing command per content type, as illustrated in FIG. 12A. Moreover, in FIG. 12A, the mobile terminal 100 is able to display a region (hereinafter named an identification information display region) 1250 for displaying identification information of a multimedia content, which will be included in a contents list, on one region of a screen.

For instance, the identification information display region 1250 includes a plurality of divided regions to display a plurality of content identification information in order. In this case, a plurality of the divided regions can be placed in order of first to fifth or higher.

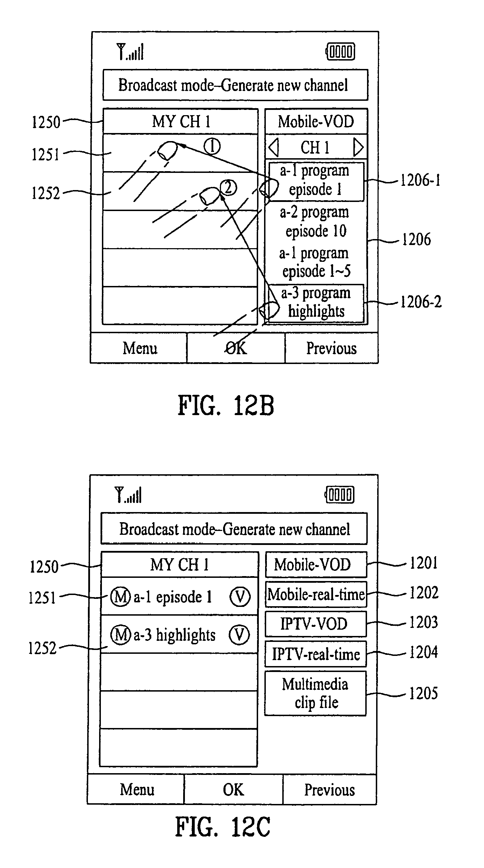

The former description with reference to FIG. 7A is applicable to the providing of corresponding content relevant information according to a specific content type selection. If the 'Mobile-VOD' 1201 is selected in FIG. 12A, the mobile terminal 100 is able to display relevant information 1206 on non-real-time mobile broadcast contents on one region of a screen, as illustrated in FIG. 12B.

If first and second content identification information 1206-1 and 1206-2 included in the content relevant information 1206 shown in FIG. 12B and the first and second divided regions 1251 and 1252 are selected, the mobile terminal 100 is able to display the first and second content identification information 1206-1 and 1206-2 on the first and second divided regions 1251 and 1252, respectively, as illustrated in FIG. 12C. For instance, the method of selecting the content identification information and the divided section can include a touch and drag between the content identification information and the divided region, as illustrated in FIG. 12B, a multi-touch to the content identification information and the divided region, or a selection for the content identification information and the divided region using a key manipulation.

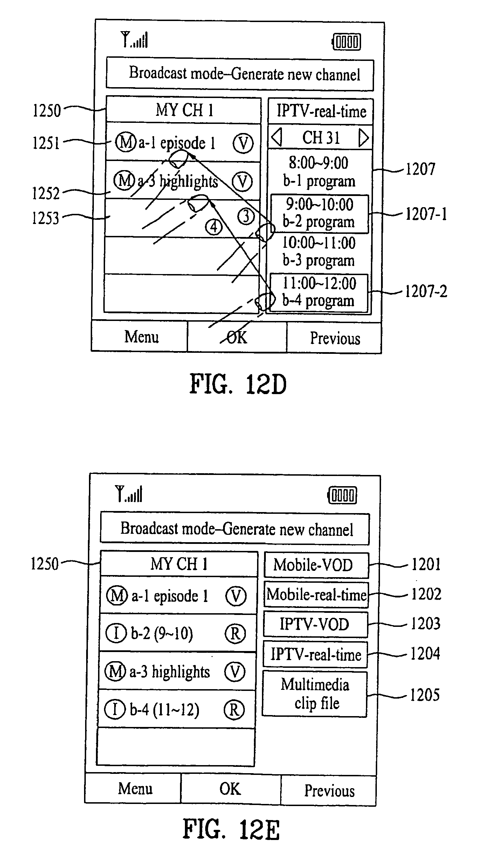

If an 'IPTV-real-time' 1204 is selected in FIG. 12C, the mobile terminal 100 is able to display relevant information 1207 on a real-time Internet broadcast content on one region of a screen, as illustrated in FIG. 12D. If third and fourth content identification information 1207-1 and 1207-2 included in the content relevant information 1207 shown in FIG. 12D and the first and third divided regions 1251 and 1253 are selected, the mobile terminal 100 shifts the second content identification information 1206-2 to the third divided region 1253, displays the third content identification information 1207-1 on the second divided region 1252, and displays the fourth content identification information 1207-2 on the fourth divided region 1254, as illustrated in FIG. 12E.

For instance, while the content identification information are already displayed on the first and second divided regions 1251 and 1252, if the first divided region is selected as a display region of different content identification information, the previous content identification information displayed on the second divided region can be displayed on the third divided region that is next to the second divided region. Of course, when the content identification information are displayed on the first and third divided regions 1251 and 1253, if the second divided section is vacant, the different identification information can be displayed on the second divided region while the display status of the first and third divided regions are maintained.

Moreover, while the content identification information are already displayed on the first and second divided regions 1251 and 1252, if the divided region below the second divided region 1253 is selected as a display region of different content identification information, the different content identification information can be displayed on the divided region below the third divided region 1253. Of course, the method of designating the content identification information and its sequence can be implemented in various ways including the above described method.

If the multimedia content selecting process is completed in the above manner, the mobile terminal 100 is able to generate one sequence designated contents list including multimedia contents corresponding to content identification information displayed in order on the divided regions of the identification information display region 1250. The divided region sequence may correspond to a play sequence of the multimedia content corresponding to the content identification information displayed on each of the divided sections. The mobile terminal 100 is able to play back the multimedia content according to the designated sequence of the content identification information displayed on the sequence designated contents list.

It is understood that a sequence designated contents list for another content type can be generated by the above described method. Moreover, it is understood that a sequence designated contents list for another content type can be generated using content relevant information provided per genre, age group, service provided recommended content or recommended list as well as the content type.

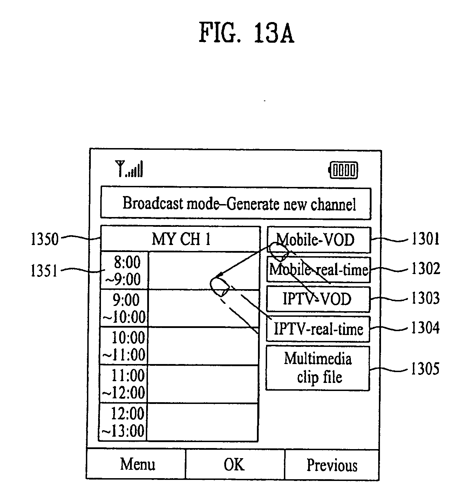

In the following description, a process for selecting a multimedia content in generating a time designated content list is explained in detail. In particular, if the 'time' 607 is selected as a condition for a user designated channel in FIG. 6C, the mobile terminal is able to perform a time designated contents list generating process. FIGS. 13A to 13I are diagrams of screen configurations for a method of selecting a multimedia content, which will be included in a time designated contents list, per content type according to the present invention.

If the 'content type' is selected from the configuration condition list shown in FIG. 6D, the mobile terminal 100 is able to display a plurality of content type regions 1301 to 1305 to receive an input of a content relevant information providing command per content type, as illustrated in FIG. 13A. In FIG. 13A, the mobile terminal 100 is able to display a region 1350 (hereinafter named an identification information display region) for displaying an identification information of a multimedia content, which will be included in a contents list, on one region of a screen.

For instance, the identification information display region 1350 can include per-time zone display regions to display a plurality of content identification information in order of time. Moreover, a time zone can be provided in a predetermined time interval, such as 1 hour. In particular, an interval, a start timing point and an end timing point of the time zone can be set by a user or can be preset in a terminal.

The providing of corresponding content relevant information according to a specific content type selection is identical to the former description with reference to FIG. 7A and its details are omitted in the following description.

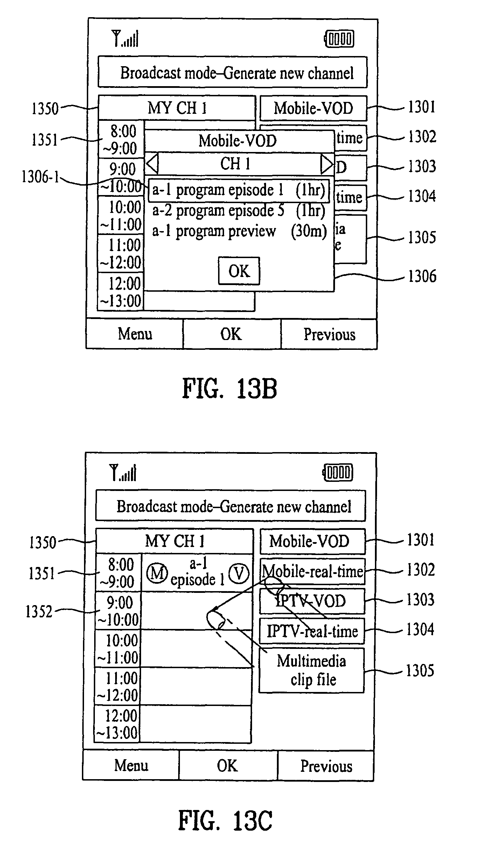

If a 'Mobile-VOD' 1301 and a first time zone region 08:00 ∼ 09:00 1351 are selected in FIG. 13A, the mobile terminal 100 is able to display relevant information 1306 on non-real-time mobile broadcast contents, as illustrated in FIG. 13B. For instance, since a first time zone interval is 1 hour, the content relevant information 1306 can display identification information of a multimedia content having a 1-hour play time.

If the first content identification information 1306-1 is selected using the content relevant information 1306 shown in FIG. 13B, the mobile terminal is able to display the first content identification information 1306-1 on the first time zone region 1351, as illustrated in FIG. 13C. For instance, the method of selecting the content type and the time zone region can include a touch & drag between the content type and the time zone region, as illustrated in FIG. 13A, a multi-touch to the content type and the time zone region, and/or a selection of the content type and the time zone region using a key manipulation.

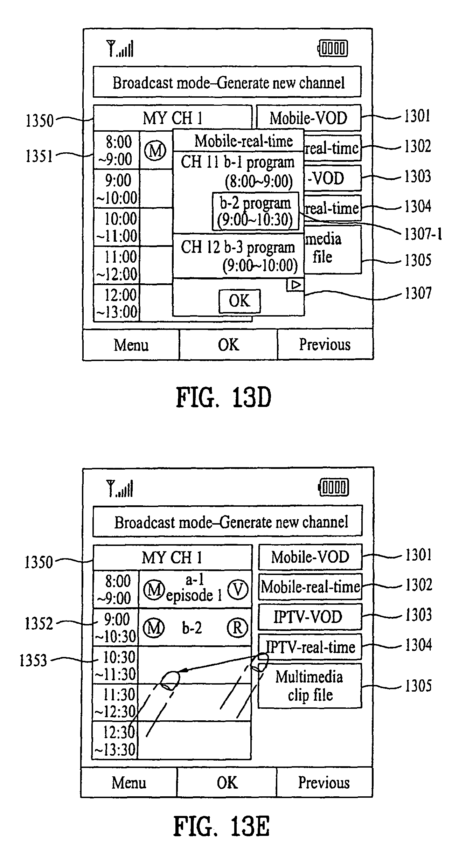

If a 'Mobile-real-time' 1302 and a second time zone region '09:00 ∼ 10:00' 1352 are selected in FIG. 13C, the mobile terminal 100 is able to display relevant information 1307 on real-time mobile broadcast contents, as illustrated in FIG. 13D. For instance, since the second time zone ranges from 09:00 to 10:00, relevant information on a content, of which broadcast start time is before 10:00, can be included in the content relevant information 1307.

If the second content identification information 1307-1 is selected using the content relevant information 1307 shown in FIG. 13D, the mobile terminal 100 is able to display the second content identification information 1307-1 on the second time zone region 1352, as illustrated in FIG. 13E. In this case, the play time of the second content is 1 hour and 30 minutes and an end time of the second content is 10:30 after the end timing point of the second time zone. An interval of the second time zone is 1 hour and 30 minutes.

Hence, an end timing point of the second time zone can be modified into 10:30. Start and end timing points of time zones including the third time zone after the second time zone are delayed by 30 minutes. The time zone interval can maintain the 1-hour interval as it is.

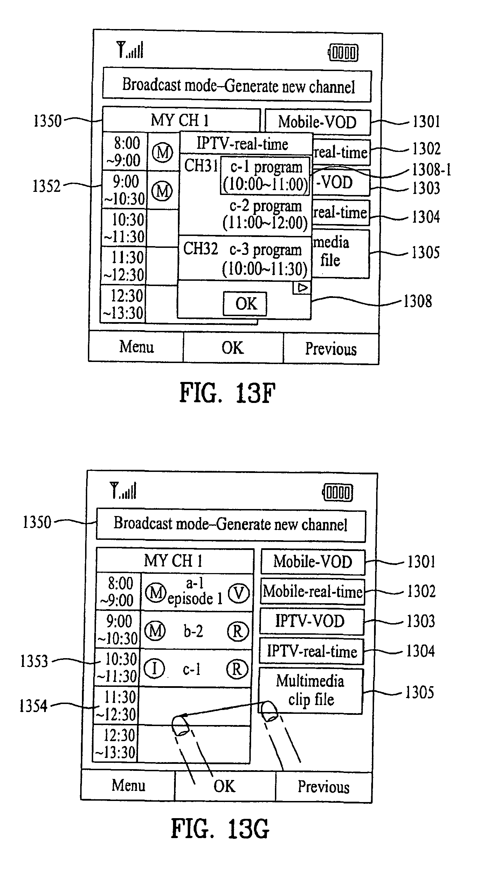

If an 'IPTV-real-time' 1304 and a third time zone region 1353 '10:30 ∼ 11:30' are selected in FIG. 13E, the mobile terminal 100 is able to display relevant information 1308 on a real-time Internet broadcast content, as illustrated in FIG. 13F. For instance, since a third time zone is 10:30 ∼ 11:30, relevant information on a content having a broadcast start time before 11:30 can be included in the content relevant information 1308.

If third content identification information 1308-1 is selected using the content relevant information 1308 shown in FIG. 13F, the mobile terminal 100 is able to display the third content identification information 1308-1 on the third time zone region 1353, as illustrated in FIG. 13G.

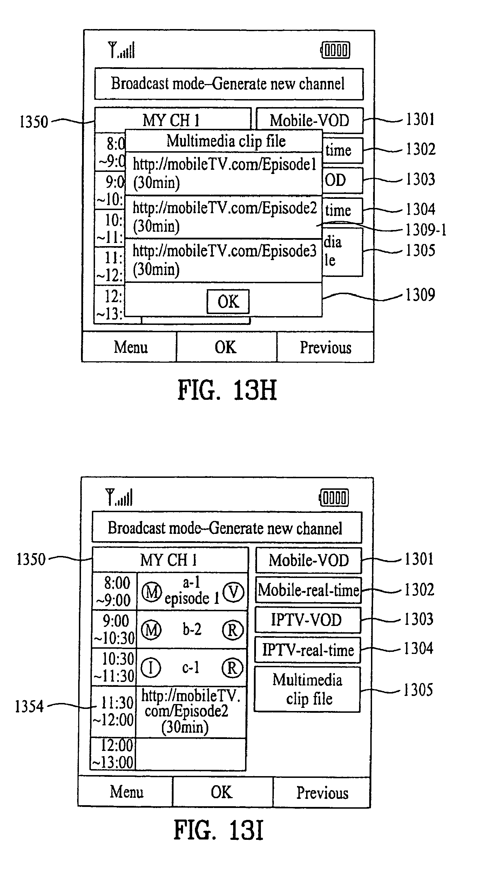

If a 'multimedia clip file' 1305 and a fourth time zone region '11:30 ∼ 12:30' 1354 are selected in FIG. 13G, the mobile terminal 100 is able to display relevant information 1309 on a multimedia clip file, as illustrated in FIG. 13H. For instance, the content relevant information 1309 can include a multimedia clip file name, a play time, and/or a website address.

If the fourth content identification information 1309-1 is selected using the content relevant information 1307 shown in FIG. 13H, the mobile terminal 100 is able to display the fourth content identification information 1309-1 on the fourth time zone region 1354, as illustrated in FIG. 13I. In this case, since the play time of the fourth content is 30 minutes, an interval of the fourth time zone can be modified into 30 minutes and an end timing point of the second time zone can be modified into 12:00. Hence, start and end timing points of time zones including the fifth time zone after the fourth time zone are advanced by 30 minutes, and the time zone interval can maintain the 1-hour interval as it is.

Of course, the method of designating the content identification information and a time of the content identification information can be implemented in various ways including the above described method. As mentioned in the above description, if the multimedia content selecting process is completed, the mobile terminal 100 is able to generate one contents list including multimedia contents corresponding to the identification information display region 1350. Therefore, the mobile terminal 100 is able to play back the multimedia content included in the time designated contents list on the corresponding time zone. Meanwhile, it is understood that the time designated contents list can be generated for other content types by the above described method.

It is a matter of course that a time designated contents list can be generated using content relevant information provided per genre, age group, service provider recommended content or recommended list as well as the above mentioned content type.

Moreover, the mobile terminal 100 is able to designate a play time for a specific multimedia content included in the sequence designated contents list. Hence, the mobile terminal 100 sequentially plays back multimedia contents included in the sequence designated contents list and is also able to perform a play operation for the designated play time for the multimedia content for which a play time is designated.

In the process for generating the sequence designated contents list or the time designated contents list, the mobile terminal 100 is able to designate a plurality of multimedia contents to one play sequence or one play time. Hence, the mobile terminal 100 plays back a multimedia content selected from a plurality of the designated multimedia contents at a play start timing point or at a random timing point or is able to play back a plurality of the designated multimedia contents simultaneously.

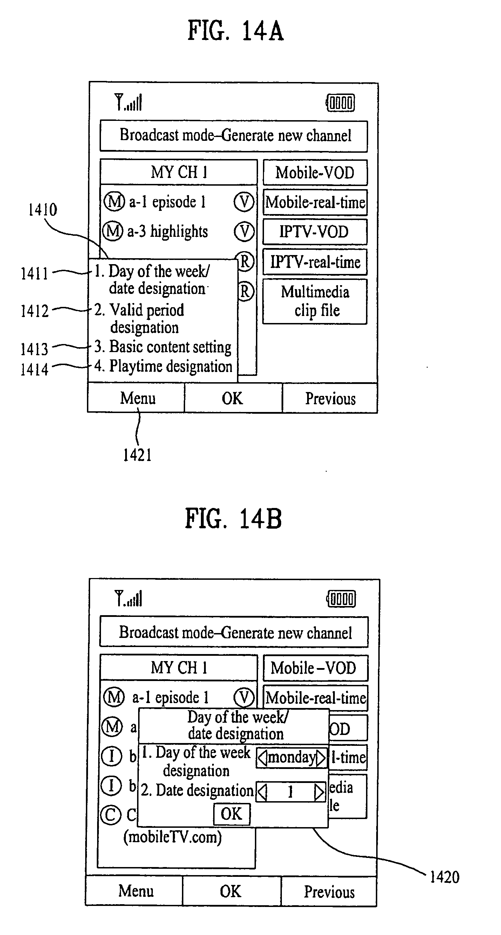

In the following description, regarding the generating step S530, a detailed condition setting method of a contents list is explained in detail. FIGS. 14A to 14E are diagrams of screen configurations for setting detailed conditions of a contents list according to the present invention. The detailed condition setting process can be performed in the course of generating a new contents list or editing a previous contents list.

The mobile terminal 100 is able to set a detailed condition settable status for a contents list generated by the above described method under the control of the controller 180. For instance, a detailed condition settable status can be set if a menu item, a key or a key region corresponding to a detailed condition setting is selected.

According to the setting of the detailed condition settable status, the mobile terminal 100 displays a detailed condition setting target contents list on a screen. If a menu region 1421 is selected, the mobile terminal 100 is able to display a detailed condition list 1410, as illustrated in FIG. 14A. In this case, a user is able to freely select the detailed condition setting target contents list through a key manipulation.

If a 'day of the week/date designation' 1411 is selected as a detailed condition, the mobile terminal 100 enables a user to designate a specific day of the week or a specific date on which the detailed condition setting target contents list is operable as broadcast organization information of a user designated channel, as illustrated in FIG. 14B. Hence, the detailed condition setting target contents list can be valid for use only on the designated specific day of the week or the designated specific date.

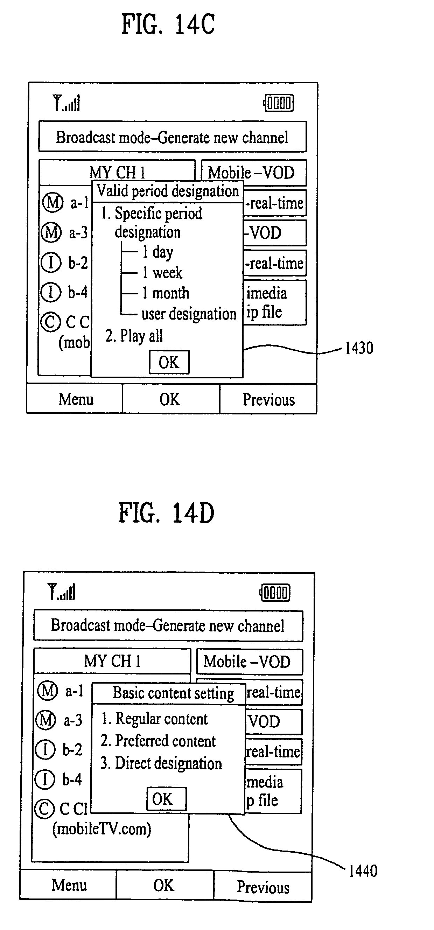

If a 'valid period designation' 1412 is selected as a detailed condition in FIG. 14A, the mobile terminal 100 enables a user to designate a valid period during which the detailed condition setting target contents list is valid as broadcast organization information of a user designated channel, as illustrated in FIG. 14C. For instance, a valid period is set to 1 day, 1 week, 1 month or a direct user designated period.

Alternatively, a valid period can be set to a period until all contents included in the detailed condition setting target contents list are completely played back. Therefore, the detailed condition setting target contents list can be valid only for the designated valid period.

If a 'basic content setting 1413 is selected as a detailed condition in FIG. 14A, the mobile terminal 100 enables a user to select a multimedia content (hereinafter named a basic content) that is to be included in a different contents list among multimedia contents included in the detailed condition setting target contents list, as illustrated in FIG. 14D. For instance, the basic content can include a regular multimedia content (regular content), which can include a periodically broadcasted content in case of a real-time content or a content broadcast by a predetermined series in case of a non-real-time content, a multimedia content (preferred content) having a preference over a predetermined reference level or a multimedia content (direct designation) directly designated by a user. Hence, the basic content can be included in a different content list despite not being selected by a user in generating the different contents list.

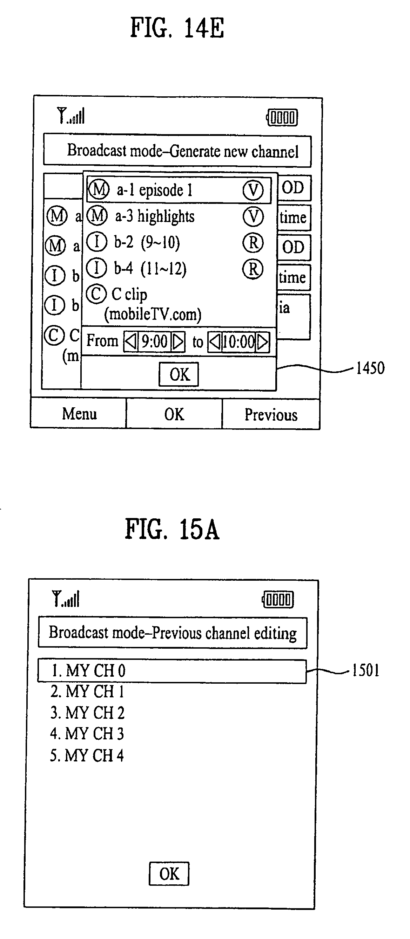

If a 'playtime designation' 1414 is selected as a detailed condition in FIG. 14A, the mobile terminal 100 enables a user to separately designate a play time for a specific multimedia content included in the detailed condition setting target contents list that corresponds to a random contents list or a sequence designated contents list, as illustrated in FIG. 14E. Therefore, a play time designated multimedia content can be played back during the designated play time.

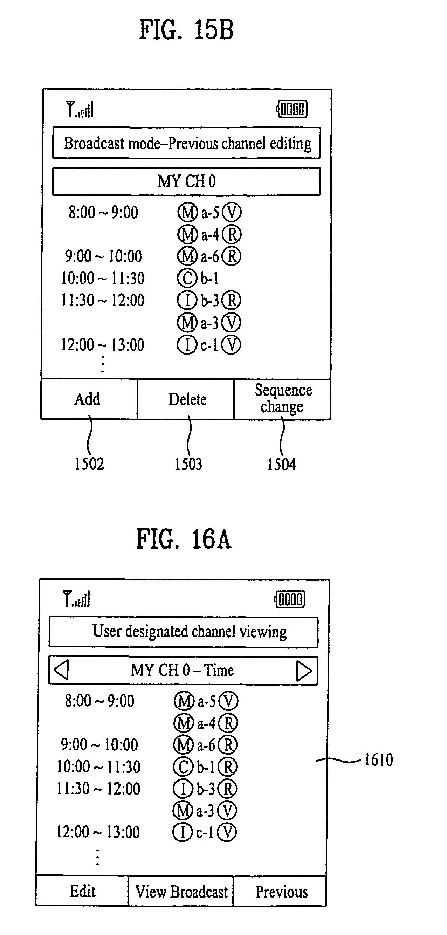

In the following description regarding the generating step S530, a process for editing a previously generated contents list is explained in detail. FIG. 15A and FIG. 15B are diagrams of screen configurations for editing a contents list.

If an 'edit previous channel' 604 is selected in FIG. 6B, the mobile terminal 100 is able to set a contents list editable status under the control of the controller 180. According to the setting of the contents list editable status, the mobile terminal 100 is able to display a list constructed with identification information, such as names, of contents lists that were previously set, as illustrated in FIG. 15A. The mobile terminal 100 is then able to display a contents list corresponding to the identification information selected from the list shown in FIG. 15A on a screen, as illustrated in FIG. 15B.

For instance, if an 'add' region 1502 is selected in FIG. 15B, the mobile terminal 100 displays content relevant information and then enables a user to select a multimedia content that is to be added to the contents list selected in FIG. 15B using the displayed content relevant information, as explained above in relation to the multimedia selecting process. If a 'delete' region 1503 is selected in FIG. 15B, the mobile terminal 100 enables a user to select multimedia content to delete from the contents list selected in FIG. 15B. If a 'sequence change' region 1504 is selected in FIG. 15B, the mobile terminal 100 receives input from a user and is then able to change a play sequence or play time designated to a multimedia content included in the contents list selected in FIG. 15B.

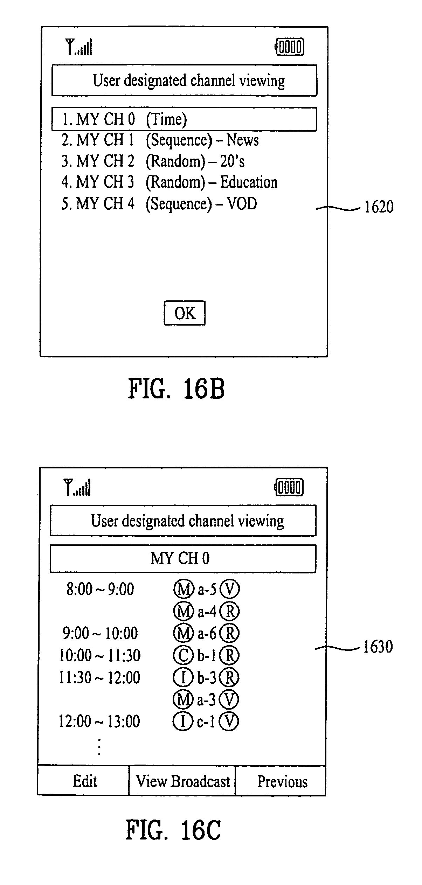

In the following description, a process for displaying the contents list generated in the generating step S530 is explained in detail. FIG. 16A and FIG. 16B are diagrams of screen configurations for displaying a contents list.

If 'user designated channel viewing' 602 is selected from the broadcast menu list shown in FIG. 6A, the mobile terminal 100 is able to display a specific contents list 1610 among at least one or more contents list that were previously generated, as illustrated in FIG. 16A. In this case, if a different contents list is selected through a key manipulation performed by a user, the mobile terminal 100 is able to display the selected different contents list. The key may be a direction key or a key region.

If 'user designated channel viewing' 602 is selected in FIG. 6A, the mobile terminal 100 is able to display a list 1620 constructed with identification information, such as name, of the previously generated at least one contents list, as illustrated in FIG. 16B. For instance, the contents list identification information can include type information of a contents list (randomization, play time designation or play sequence designation) and condition information (genre_news, education, content type_VOD, or agegroup_20's). If specific identification information is selected from the list shown in FIG. 16B, the mobile terminal 100 is able to display a contents list 1630 corresponding to the selected specific identification information, as illustrated in FIG. 16C.

Referring now to FIG. 5, the mobile terminal 100 receives one of the at least one or more multimedia contents included in the contents list generated in the generating step S530 under the control of the controller 180 at a specific timing point via the wireless communication unit 110 (S540). In particular, if a reception target multimedia contents is a mobile broadcast content, the mobile terminal 100 is able to receive a multimedia content using the broadcast receiving module 111. If a reception target multimedia content is an Internet broadcast content or a multimedia clip file, the mobile terminal 100 is able to receive a multimedia content using the wireless Internet module 113. Regarding the specific timing point of performing the receiving step S540, a real-time content and non-real-time content (multimedia clip file included) are separately explained in the following description.

In case of a real-time content, the mobile terminal 100 is able to receive a real-time content at a real-time providing timing point of the real-time content. For instance, the mobile terminal 100 is able to receive a real-time mobile broadcast content, which is an example of a real-time content, at a real-time providing timing point, such as a broadcast timing point or a random timing point of broadcast time.

In case of a non-real-time content, the mobile 100 is able to receive a multimedia content at a terminal requested timing point. In this case, the terminal requested timing point may be a timing point provided with a non-real-time content if a request for a non-real-time content transmission is made to a multimedia content providing server (not shown). For instance, the mobile terminal 100 is able to make a request for a multimedia content transmission at one timing point selected from a completion timing point of generation of a contents list including a non-real-time content or a timing point after a predetermined duration from this completion timing point, a completion timing point of playback of a content behind a predetermined sequence from a non-real-time content included in a sequence designated contents list and a completion timing point of playback of a content behind a predetermined sequence from a time zone to which a non-real-time content included in a time designated contents list belongs.

The mobile terminal 100 determines whether the multimedia content received in the receiving step S540 is in a playable status, under the control of the controller 180 (S550). As input of a multimedia content play command signal from an external environment is received, the controller 180 determines that the received multimedia content is in the playable status if the multimedia module 180 is set to an operable status. If a user designated channel, which is based on the contents list including the received multimedia content, is being used in a broadcast output mode, the controller 180 determines that the received multimedia content is in the playable status.

Meanwhile, despite receiving the multimedia content, if the controller 180 fails to receive the input of the multimedia content play control command signal, the controller 180 determines that the received multimedia content is not in the playable status. If the received multimedia content is included in the sequence designated contents list and if a play sequence designated for the received multimedia content is behind a currently played multimedia content, the controller 180 determines that the received multimedia content is not in the playable status.

As a result of the controller 180 performing the determining step S550, if the controller 180 determines that the received multimedia content is in the playable status, the controller 180 plays back the multimedia content received in the receiving step S540 using the multimedia module 181 (S560). If the controller 180 determines that the received multimedia content is not in the playable status, the controller 180 stores the multimedia content received in the receiving step S540 in the memory 160 (S570).

In the playing step S560, currently received multimedia content is played back (the playback of the multimedia content stored in the memory 160 will be explained later). The multimedia content played in the playing step S560 can be stored in the memory 160 according to a selection made by a user.

As a result of performing the playing step S560, the mobile terminal 100 is able to output a multimedia content via the output unit 150. For instance, a video signal constructing a multimedia content is output via the display 151 and an audio signal constructing the multimedia content can be output via the audio output module 152.

In performing the storing step S570, if the storage of the received multimedia content is impossible due to the capacity shortage of the memory 160, the controller 180 or the user is able to select at least one of a deletion (hereinafter named a previously stored content deletion) of a multimedia content previously stored in the memory 160 and a playback (hereinafter named a received content playback) of the received multimedia content. In this case, the operation of selection for the previously stored content deletion or the received content playback is performed according to a decision made by a user or a random decision made by the controller 180.

For instance, in case of the previously stored content deletion, a user is able to select a multimedia content to delete from a displayed list constructed with previously stored multimedia contents. In case of the received content playback, the mobile terminal 100 is able to play and output the received multimedia content. Even if the received multimedia content is included in the sequence or time designated contents list, it can be played irrespective of a designated playback sequence or a designated play time.

In the following description, a process for playing and outputting a multimedia content included in a contents list is explained in detail with reference to the accompanying drawings. As mentioned in the foregoing description, a contents list can operate as a broadcast organization list or guide of a user designated channel. Moreover, a playback and output of a multimedia content included in a contents list can be performed if a broadcast output mode is entered.

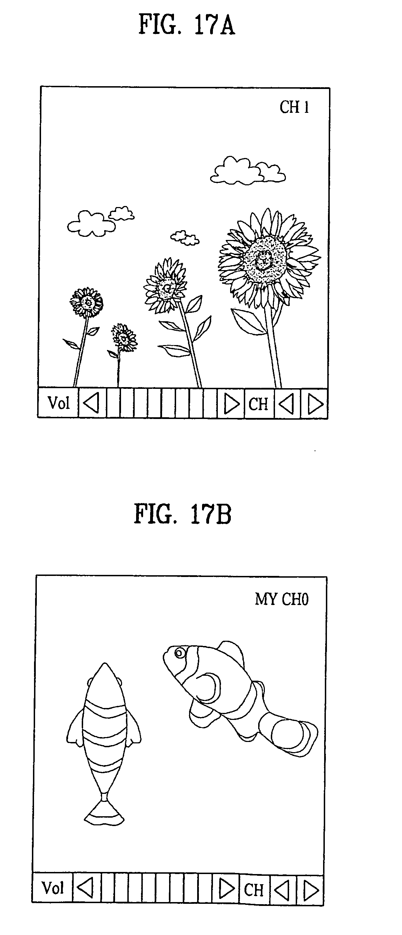

FIGS. 17A to 17D are diagrams of screen configurations for switching to a user designated channel in the course of outputting a broadcast using a channel direction key. When the mobile terminal 100 enters a broadcast output mode and is outputting a broadcast signal provided on a random broadcast channel, as illustrated in FIG. 17A, the mobile terminal 100 is able to receive an input of a broadcast channel switching signal from a user. In this case, the user is able to manipulate a channel key, or a key region, to input the broadcast channel switching signal.

The mobile terminal 100 is able to select a user designated channel by switching a broadcast channel to correspond to the broadcast channel switching signal input in FIG. 17A. For instance, broadcast channels selectable through the mobile terminal 100 can include a broadcast channel (hereinafter named a service provider designated channel) operated by a broadcast service provider to provide a broadcast signal and a user designated channel. Hence, the mobile terminal 100 is able to play and output a multimedia content included in a contents list corresponding to the selected user designated channel, as illustrated in FIG. 17B.

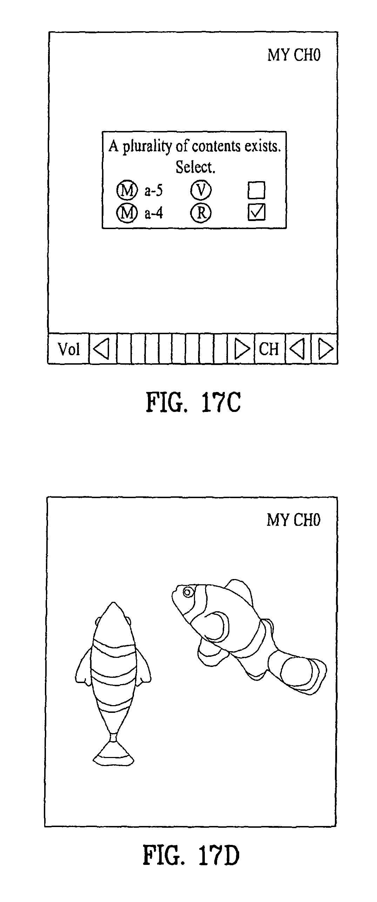

Meanwhile, if a plurality of playback and output target multimedia contents exist, the mobile terminal 100 is able to play and output a multimedia content selected by a user, as illustrated in FIGS. 17C and 17D. For instance, a plurality of multimedia contents may be designated to one sequence in a sequence designated contents list or a plurality of multimedia contents may be designated to one time zone in a time designated contents list. Moreover, the mobile terminal 100 is able to select a playback and output target multimedia content according to a contents list type in the following manner.

In a case where a contents list corresponding to the selected user designated channel is a random contents list, the mobile terminal 100 is able to select a multimedia content selected by the controller 180 or a user randomly. In a case where a contents list corresponding to the selected user designated channel is a sequence designated contents list, the mobile terminal 100 is able to select a multimedia content in a first sequence in case of an initial entry of a user designated channel, a multimedia content for which playback was stopped at a channel use end timing point with reference to a most recent entry in case of a user designated channel reentry, or a multimedia content in a sequence next to that of a playback completed multimedia content. In a case where a contents list corresponding to the selected user designated channel is a time designated contents list, the mobile terminal 100 is able to select a multimedia content corresponding to a time zone in which a current time is included.

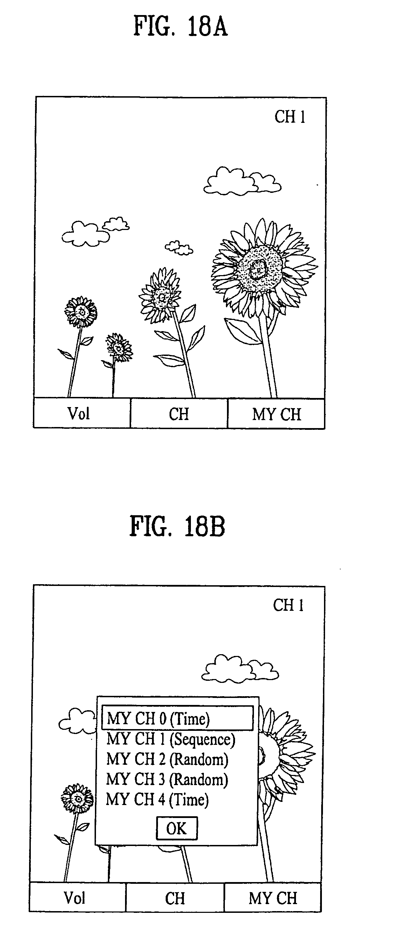

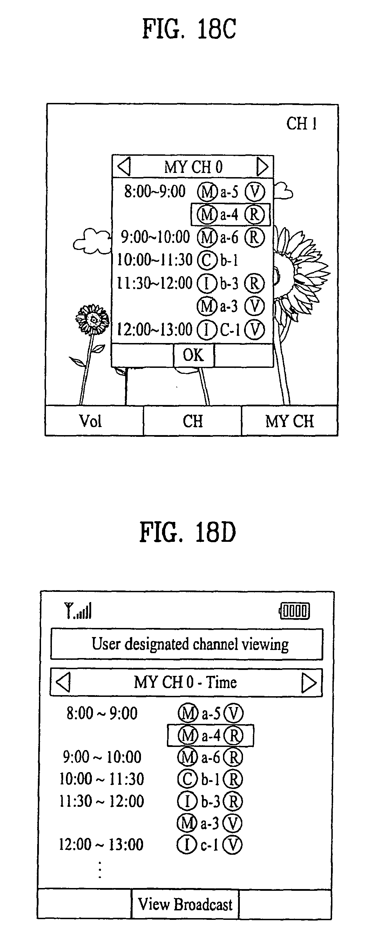

FIGS. 18A to 18E are diagrams of screen configurations for switching to a user designated channel in the course of outputting a broadcast using a contents list. When the mobile terminal 100 enters a broadcast output mode and is outputting a broadcast signal provided on a random broadcast channel, as illustrated in see FIG. 18A, if a user selects a key or a key region, depicted in FIG. 18A as "MY CH," or a menu item corresponding to a user designated channel list viewing, the mobile terminal 100 is able to display a user designated channel list, as illustrated in FIGS. 18B and 18C.

When displaying a user designated channel list, the mobile terminal 100 displays the user designated channel list, as illustrated in FIG. 18B, and is then able to display a contents list corresponding to a user designated channel selected from the user designated channel list, as illustrated in FIG. 18C. Alternatively, the mobile terminal 100 omits a user designated channel list displaying process, directly displays a contents list corresponding to a random user designated channel, and is then able to switch the user designated channel according to a selection made by a user, as illustrated in FIG. 18C.

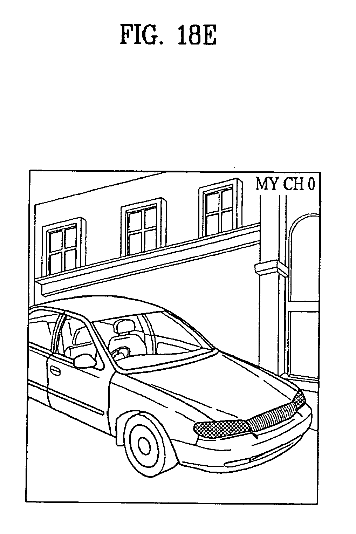

Meanwhile, if a key, a key region, or a menu item corresponding to a user designated channel list viewing is selected while a broadcast is not output, the mobile terminal 100 is able to display a contents list corresponding to a random user designated channel, as illustrated in FIG. 18D. If a playback command signal of a specific multimedia content in the displayed contents list shown in FIG. 18C or FIG. 18D is input from a user, the mobile terminal 100 is able to play back and output the selected specific multimedia content, as illustrated in FIG. 18E.

Meanwhile, in FIGS. 17A to 18E, if attempting to play back a specific one of at least one or more multimedia contents included in a contents list, the mobile terminal 100 is able to determine whether to store specific multimedia content in the memory 160 under the control of the controller 180. If the specific multimedia content is stored in the memory 160, the controller 180 searches the memory 160 for the specific multimedia content and then plays back the searched specific multimedia content using the multimedia module 181. If the specific multimedia content is not stored in the memory 160, the controller 180 receives the specific multimedia content using the wireless communication unit 110 and then plays back the received specific multimedia content using the multimedia module 181.

For instance, even if a specific multimedia content is a real-time content, if a current time corresponds to a timing point after a specific multimedia content broadcast time, as the specific multimedia content has been received and stored on a broadcast time, the mobile terminal 100 is able to play back the stored specific multimedia content. Therefore, a user can be provided with a real-time content even if a broadcast time of the real-time content is missed.

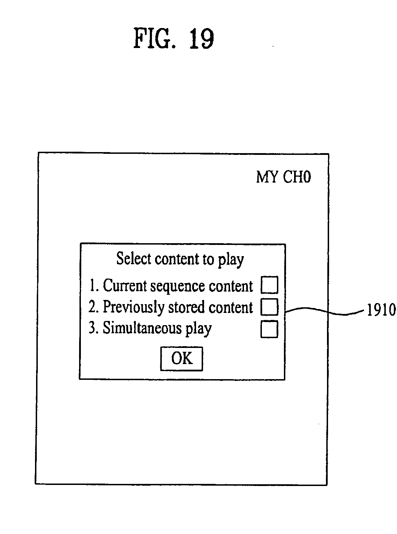

FIG. 19 is a diagram of a screen configuration for selecting at least one of a current sequence content and a previously stored content as a playback target content according to the present invention. Referring to FIG. 19, if a user designated channel is entered, the mobile terminal 100 enables a user to select whether to play back a multimedia corresponding to a current sequence, or a time zone to which a current time belongs, or a previously stored multimedia content.

For instance, if a current sequence content is selected in FIG. 19, the mobile terminal 100 plays back a multimedia content corresponding to a current sequence. If a previously stored content is selected in FIG. 19, the mobile terminal 100 plays back the previously stored content. If a plurality of previously stored contents exists, a content selected by a user from the previously stored contents is played back. If a simultaneous playback is selected in Fig. 19, the mobile terminal 100 is able to simultaneously play back both a multimedia content corresponding to a current sequence and a previously stored content.

More particularly, in case of the simultaneous playback, the controller 180 outputs an audio signal of a content having a priority given thereto or an audio signal selected by a user in outputting an audio signal. In outputting a video signal, the controller 180 is able to simultaneously output video signals of two contents using a screen division or distribution technique, such as PIP.

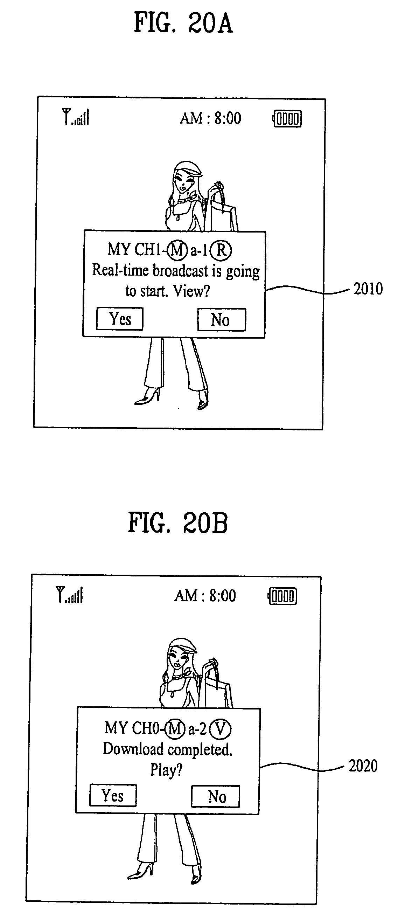

FIGS. 20A to 20D are diagrams of screen configurations for announcing a playable status of a multimedia content included in a contents list according to the present invention. The mobile terminal 100 outputs announcement information 2010, such as a content name, content providing channel information, or broadcast time information, of a real-time content included in a contents list at a broadcast start timing point or a timing point within a predetermined time from the start timing point and then enables a user to select whether to view the real-time content, as illustrated in FIG. 20A.

Alternatively, the mobile terminal 100 outputs announcement information 2020, such as a content name or content providing channel information, of a non-real-time content included in a contents list at a download completed timing point of the non-real-time content or a timing point of buffering a predetermined size and then enables a user to select whether to play back the non-real-time content, as illustrated in FIG. 20B. Furthermore, if the contents list mentioned in FIG. 20A or FIG. 20B is a sequence designated contents list or a time designated contents list, the content provided with the announcement information shown in FIG. 20A or FIG. 20B is applicable despite not being a content corresponding to a time zone to which a current sequence or time belongs.

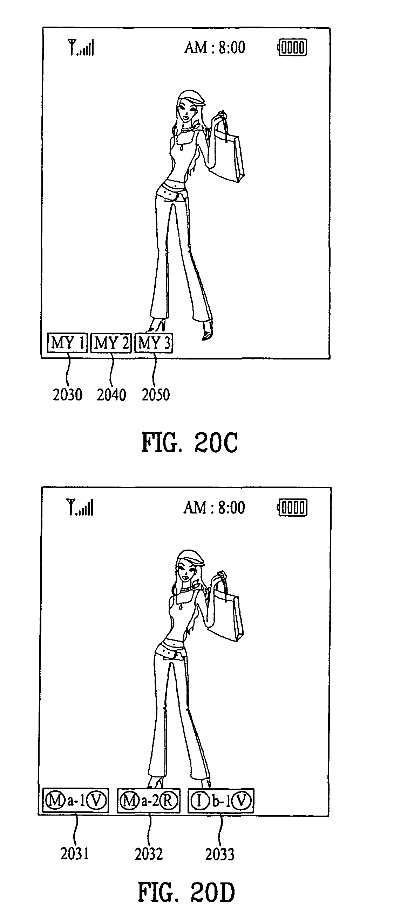

For user designated channels corresponding to a contents list including playable multimedia content, the mobile terminal 100 is able to display identifiers 2030, 2040 and 2050 of user designated channels on one region of a screen, as illustrated in FIG. 20C. For instance, the playable multimedia contents can include a previously stored multimedia content and/or a multimedia content provided by real time at a present time. Additionally, an identifier of a user designated channel on which a real-time content is currently provided can be displayed differently from other identifiers.

If an identifier of a specific user designated channel is selected by a user, the mobile terminal 100 is able to display identifiers 2031, 2032 and 2033 of currently playable multimedia contents in a contents list corresponding to the specific user designated channel on one region of the screen, as illustrated in FIG. 20D. The mobile terminal 100 skips the process for displaying the identifier of the user designated channel but is able to directly display identifiers of currently playable multimedia contents in all contents lists.

The above described operation of announcing a playable status of a multimedia content can be performed in any mode of the mobile terminal 100 such as a standby mode, an application driven mode (e.g., audio/video communication in progress, message transmission and reception in progress, or MP3 driving in progress), and/or a broadcast output mode. In the following description, a process for performing a playback operation of a multimedia content or selectively performing the playback operation is explained in detail with reference to the accompanying drawings. For clarity and convenience of description, a contents list is limited to a time designated contents list, a multimedia content is limited to a real-time content, and a time zone interval of a time designated contents list can be limited to 1 hour.

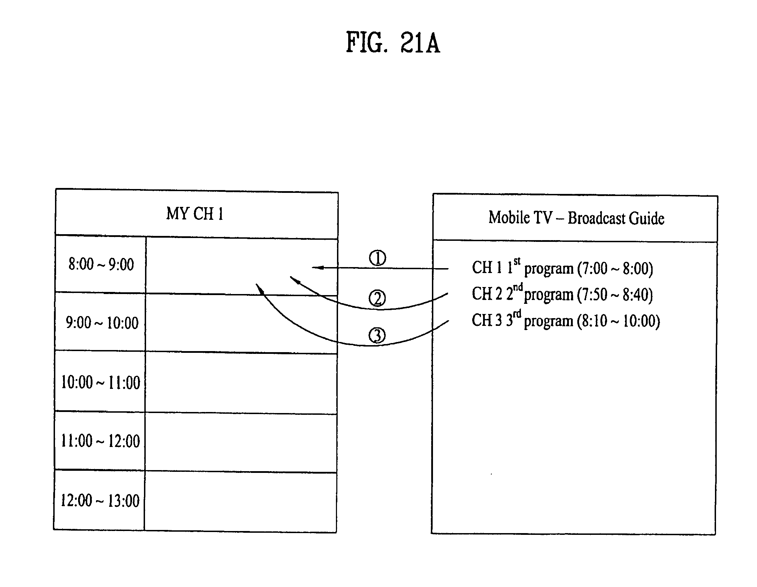

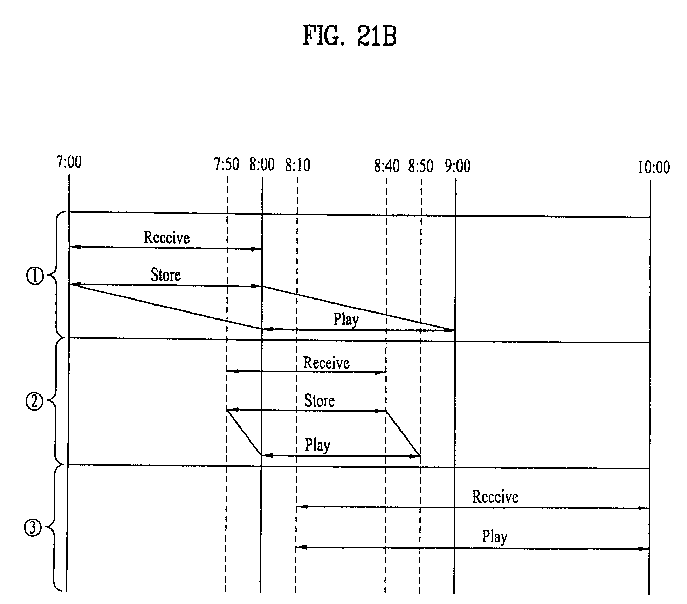

FIG. 21A and FIG. 21B are diagrams for playback or storage of a multimedia content according to a reception time and play time of the multimedia content according to the present invention. A first case (1) includes a first real-time content having a broadcast time of 07:00 ∼ 08:00 that is designated to a time zone 08:00 ∼ 09:00. In the first case, the mobile terminal 100 receives and stores the first real-time content in the broadcast time of 07:00 - 08:00 and is then able to play back the stored first real-time content in the designated time zone of 08:00 - 09:00.

A second case (2) includes a second real-time content having a broadcast time of 07:50 - 08:40 that is designated to a time zone 08:00 ∼ 09:00. In the second case, the mobile terminal 100 receives and stores the second real-time content between the broadcast time 07:50 and a start timing point 08:40 of the designated time zone and is then able to play back the stored second real-time content in the designated time zone between 08:00 and 08:50. Therefore, a user can be provided with a real-time content that is delayed by 10 minutes, which is similar to a time shifting function.

Moreover, as the playback operation of the second real-time content is ended at 08:50, an end timing point of the designated time zone is changed to 08:50 from 09:00 and a start timing point of a subsequent time zone can be changed to 08:00 in conjunction with the former change. Alternatively, the mobile terminal is able to provide a previously-stored random multimedia content or play back a broadcast content provided by a broadcast service provider, during a gap between a play end timing point 08:50 of the second real-time content and a start timing point 09:00 of the subsequent time zone.

A third case (3) includes a third real-time content having a broadcast time of 08:10 ∼ 10:00 that is designated to a time zone 08:00 ∼ 09:00. In the third case, since a start timing point of a broadcast time belongs to the designated time zone, the mobile terminal 100 is able to receive and update the third real-time content from a start timing point 08:10 of the broadcast time.

Of course, as the playback operation of the third real-time content is ended at 10:00, an end timing point of the designated time zone is changed to 10:00 from 09:00. A start timing point of a subsequent time zone can be changed to 10:00 in conjunction with the former change or the third real-time content and a content corresponding to the subsequent time zone can be simultaneously or selectively provided between 09:00 and 10:00, which corresponds to a case where a plurality of contents are designated to one time zone.

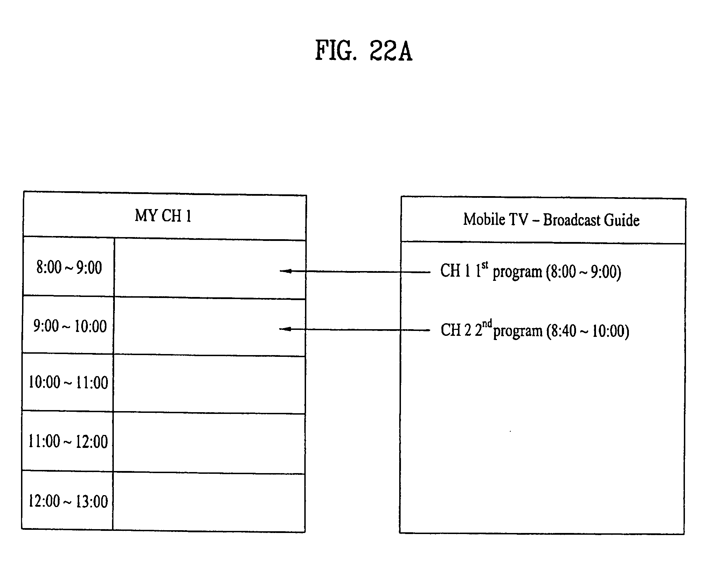

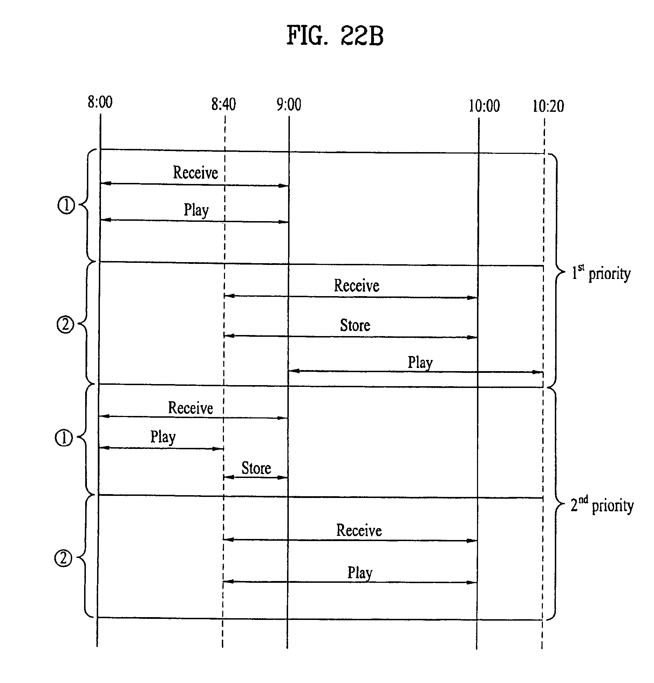

FIG. 22A and FIG. 22B are diagrams for playback or storage of a first multimedia content or a second multimedia content according to a priority during an overlapped interval if broadcast times of the first and second multimedia contents are overlapped with each other. If a first real-time content has a broadcast time between 08:00 and 09:00 and a second real-time content has a broadcast time between 08:40 and 10:00, the first and second real-time contents may have an overlapped interval in the broadcast times between 08:40 and 09:00. In this case, the mobile terminal 100 plays back the real-time content having a priority between the first and second real-time contents and is able to store the other real-time content, during the overlapped interval.

In a case where the priority is given to the first real-time content (first priority), the mobile terminal 100 normally plays back the first real-time content between 08:00 and 09:00, stores the second real-time content during the overlapped interval between 08:40 and 10:00 and is able to play back the stored second real-time content between 09:00 and 10:00. Furthermore, as a play end timing point of the second real-time content is changed to 10:20, a start timing point of a next time zone is changed to 10:20 or the second real-time content and at least one or more contents belonging to the next time zone can be designated. This is mentioned in detail in the foregoing description. In a case where priority is given to the second real-time content (second priority), the mobile terminal 100 receives and plays back the first real-time content between 08:00 and 08:40, receives and stores the first real-time content between 08:40 and 10:00, and is able to normally receive and play back the second real-time content between 08:40 and 10:00.

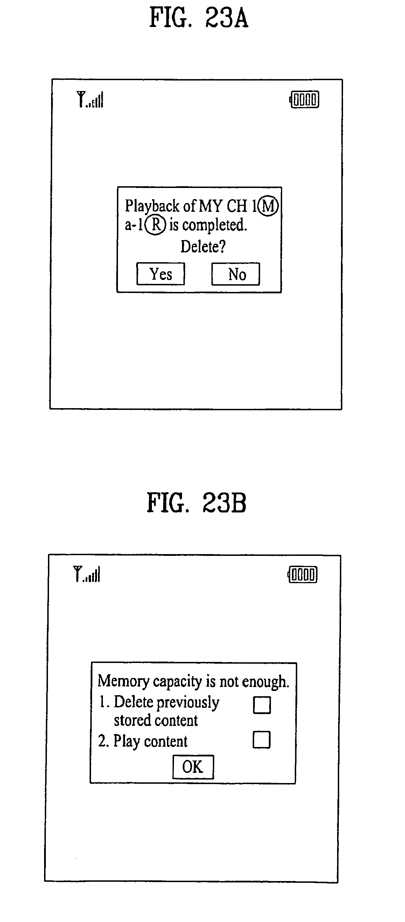

A process for deleting a multimedia content or a contents list is explained in detail with reference to the accompanying drawings as follows. FIGS. 23A to 23C are diagrams of screen configurations for deleting a previously stored multimedia content.

If a playback of a previously stored multimedia content is completed, the mobile terminal 100 is able to delete the playback completed multimedia content from the memory 160, as illustrated in FIG. 23A. In this case, the mobile terminal 100 determines whether to delete the playback completed multimedia content according to a selection made by a user. Alternatively, if a playback completion of the previously stored multimedia content is detected, the mobile terminal 100 is able to automatically delete the corresponding multimedia content under the control of the controller 180.

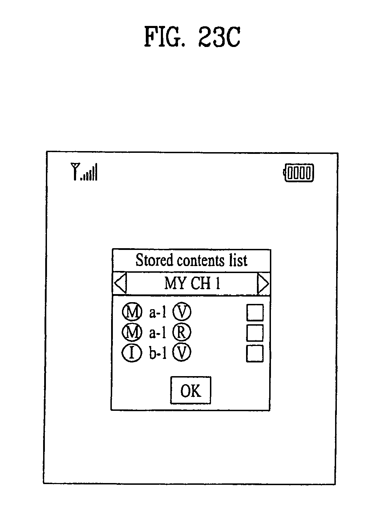

In storing a multimedia content included in a contents list in the memory 160, if a storage space of the memory 160 is insufficient, the mobile terminal 100 enables a user to select a deletion of the previously stored multimedia content or a playback of a current storage target multimedia content, as illustrated in FIG. 23B. Alternatively, the mobile terminal 100 provides a list of multimedia contents stored in the memory 160 among at least one or more multimedia contents included in a contents list, thereby enabling a user to directly select a multimedia content to delete, as illustrated in FIG. 23C.

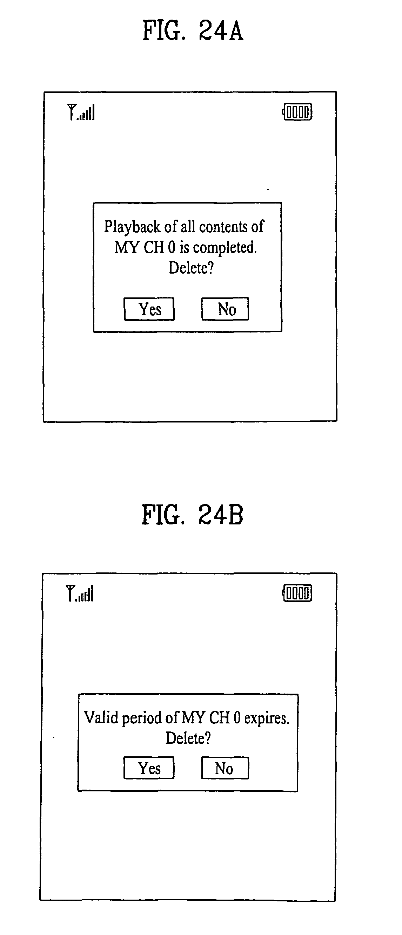

FIGS. 24A to 24D are diagrams of screen configurations for deleting a previously generated contents list. If all multimedia contents included in a specific contents list are completely played back, the mobile terminal 100 is able to delete the specific contents list, as illustrated in FIG. 24A. In this case, the mobile terminal 100 determines whether to delete the specific contents list according to a selection made by a user, as illustrated in FIG. 24A. If the playback completion of all multimedia contents included in the specific contents list is detected, the mobile terminal 100 is able to automatically delete the specific contents list under the control of the controller 180.

Alternatively, if a valid time set for the specific contents list expires, the mobile terminal 100 is able to delete the specific contents list, as illustrated in FIG. 24B. In this case, the mobile terminal 100 determines whether to delete the specific contents list according to a selection made by a user, as illustrated in FIG. 24B. If the expiration of the valid period set for the specific contents list is detected, the mobile terminal 100 is able to automatically delete the specific contents list under the control of the controller 180.

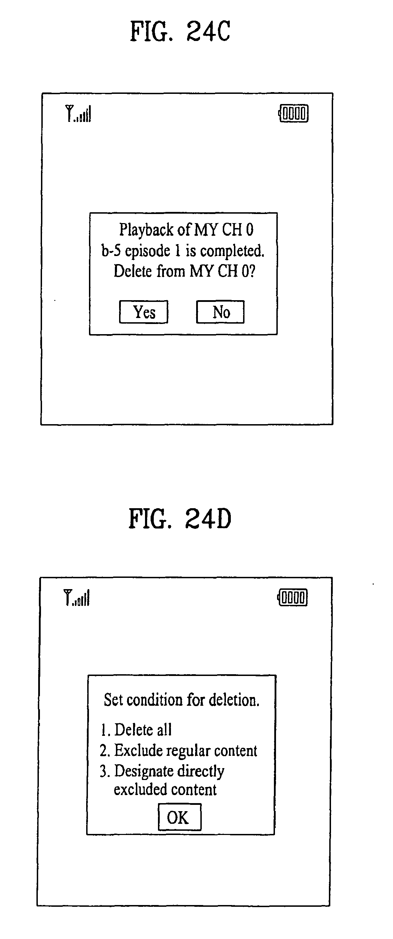

Alternatively, if a specific multimedia content in the specific contents list is completely played back, the mobile terminal 100 is able to delete the specific multimedia content from the specific contents list, as illustrated in FIG. 24C. Furthermore, a user is able to specify contents list deleting conditions, as illustrated in FIG. 24D. For instance, the deleting conditions can include a contents list self-deletion ("Delete all"), a deletion exclusion of a regular content in a contents list ("Exclude regular content"), and/or a direct designation of a deletion excluded target content by a user ("Designate directly excluded content").

A process for updating a contents list is explained in detail with reference to the accompanying drawings as follows. If a multimedia contents database is updated, the mobile terminal 100 is able to receive update information from the multimedia contents database using the wireless communication unit 110. For instance, the update information is received according to a request made by the mobile terminal 100 or can be randomly transmitted to the mobile terminal 100 by the multimedia contents database. The update information can include multimedia content update information, multimedia content play time/broadcast time change information, and/or pay-change information of multimedia content (if 'pay' is changed into 'free').

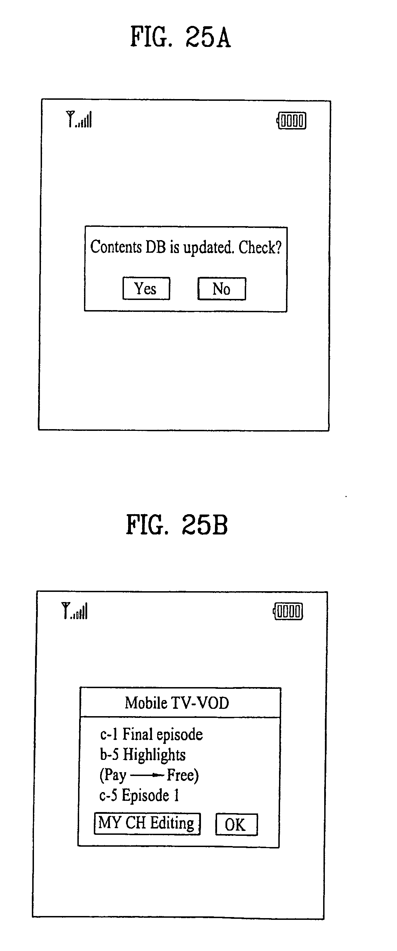

FIGS. 25A to 25C are diagrams of screen configurations for updating a previously generated contents list using update information of a contents database according to the present invention. If update information is received from a multimedia contents database, the mobile terminal 100 informs a user of the reception of the update information and enables the user to select whether to check the update information, as illustrated in FIG. 25A.

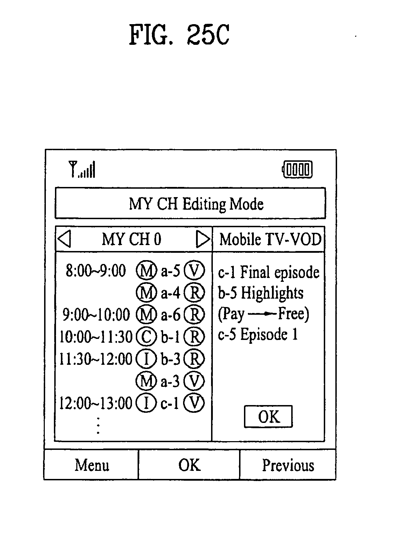

If "Contents DB is updated. Check? (Yes)" is selected in FIG. 25A, the mobile terminal is able to output the received update information, as illustrated in FIG. 25B. If a key or a key region 'MY CH editing', or a menu item corresponding to a contents list editing command using the update information is selected in FIG. 25B, the mobile terminal 100 displays an editing target contents list on one region of a screen and is able to display the update information on the other region of the screen, as illustrated in FIG. 25C. Therefore, the controller 180 is able to update a multimedia content included in the editing target contents list into a multimedia content included in the update information.

In the following description, a case where a shadow area is entered in the course of receiving a specific multimedia content included in a contents list is explained in detail. If the mobile terminal 100 enters a shadow area in the course of receiving a specific multimedia content included in a contents list, the mobile terminal 100 is able to search for a content identical to the specific multimedia content, which is being received, under the control of the controller 180.

For instance, the mobile terminal 100 is able to search multimedia contents differing in a content type in a contents list including the reception-ongoing multimedia content or content relevant information corresponding to the content type different from that of the reception-ongoing multimedia content. In this case, the content relevant information can be stored in the memory 160.

If the same content is found as a result of the search, the wireless communication unit 110 is able to receive the searched same content under the control of the controller 180. If the same content is not found as a result of the search, the wireless communication unit 110 is able to receive a receivable multimedia content in the contents list, in which the reception-ongoing multimedia content is included, under the control of the controller 180. The reason of the applicability in case of the different content type is based on the fact that a shadow area for mobile contents may not be a shadow area for Internet contents.

Moreover, if the mobile terminal 100 enters a shadow area in the course of receiving a specific multimedia content included in a contents list, the mobile terminal 100 interrupts the reception of the specific multimedia content. If the mobile terminal 100 moves away from the shadow area, the mobile terminal 100 is able to resume the interrupted reception of the specific multimedia content. For instance, the mobile terminal 100 receives the whole reception-interrupted specific multimedia content again or resumes the reception of the specific multimedia content from a timing point of the reception interruption.

In the following description, a case where a sequence is changed in a sequence designated contents list or a time designated contents list is explained in detail. In a case where a play sequence is designated in order of first to third contents in a sequence designated contents list, if a sequence is changed so that the third content can be played after completion of a playback of the first content, the mobile terminal 100 excludes the second content from the play sequence or is able to change a sequence of the second content into a sequence next to that of the third sequence.

According to the present invention, the above described contents list generating, editing and updating processes can be performed using an external device, such as a computer or a different terminal. The terminal can be provided with the results from performing the contents list generating, editing and updating processes by the external device.

For instance, in case that the above described contents list generating, editing and updating processes are performed through a computer, the corresponding result can be transmitted to the mobile terminal 100 via the Internet. Accordingly, the present invention provides several effects and/or advantages.

First, the present invention is able to construct a user designated channel, for which a contents list configured according to a user's intention is set to a broadcast organization list with a broadcast channel on which a multimedia content targeted by a user is provided. Second, the present invention designates a configuration condition of a contents list to a randomization, a play sequence or a play time, thereby generating a contents list according to a condition specified by a user. Third, the present invention stores a real-time content, which is not viewed at a broadcast time, in a memory and is then able to play back the stored content in the future, thereby substantially providing a user with the real-time content.

It will be apparent to those skilled in the art that various modifications and variations can be specified into other forms without departing from the scope of the inventions. For instance, the above-described methods can be implemented in a program recorded medium as computer-readable codes. The computer-readable media include all kinds of recording devices in which data readable by a computer system are stored. The computer-readable media include ROM, RAM, CD-ROM, magnetic tapes, floppy discs, optical data storage devices, and the like for example and also include carrier-wave type implementations (e.g., transmission via Internet). The computer can include the controller 180 of the terminal.

It will be apparent to those skilled in the art that various modifications and variations can be made in the present invention without departing from the scope of the inventions. Thus, it is intended that the present invention covers the modifications and variations of this invention, provided they come within the scope of the appended claims.

## Claims

1. A mobile terminal (100), comprising:
a wireless communication unit (110) configured to receive content and content relevant information, the wireless communication unit comprising at least two communication modules configured to receive content along a broadcast receiving module, a mobile communication module, a wireless internet module, and a short-range communication module;
a memory (160) configured to store at least one of the to be received content and content relevant information;
a user input unit (130) configured to select at least one content among the at least one of the to be received content using the received content relevant information and to configure a start time for each of the selected at least one content; and
a controller (180) configured to generate a contents list for creating a customized channel, the contents list including the selected at least one content,
wherein the wireless communication unit is further configured to receive the selected at least one content included in the generated contents list at a specific timing point under the control of the controller,
wherein the selected at least one content is of at least one content type which is one of a real-time mobile broadcast content, a non-real-time mobile broadcast content, a real-time Internet broadcast content, a non-real-time Internet broadcast content or a clip file,
wherein if the selected at least one content is one of the non-real-time mobile broadcast content, the non-real-time Internet broadcast content and the clip file, the specific timing point is one of a completion timing point of generation of the contents list, a timing point after a predetermined duration from the completion timing point of generation of the contents list,
wherein the controller is further configured to store a received selected at least one content and to play back the stored at least one content when a current time reaches the configured start time of the selected at least one content, and
wherein:
the controller is further configured to search for a content of a different content type and identical to the selected at least one content being received if a shadow area with respect toreception of the selected at least one content is entered during the course of receiving the selected at least one content,
the wireless communication unit is further configured to receive the content idenlical to the selected at least one content being received under the control of the controller if the content idenlical to the selected at least one content being received is lound, and
the wireless communication unit is further configured to receive a different content receivable through a communication nodule different from the communication module used for the reception of the selected at least one content. and included in the contents list under the control of the controller if the content identical to the selected at least one content being received is not found.

2. The mobile terminal of claim 1, wherein:
the wireless communication unit is further configured to receive content identification information corresponding to a specific condition from a content database, and
the specific condition comprises at least a content type, a genre, an age group, an age restriction, a day of the week, a date, a content preference or a service provider recommended content.

3. The mobile terminal of any of claims 1-2, wherein:
the controller is further configured to play back the selected at least one content if an input of a multimedia content play command signal is received from an external environment and a multimedia module (180) of the mobile terminal is set to an operable status or if a user designated channel based on the contents list is used in a broadcast output mode, and
the controller is further configured to store the selected at least one content if the controller fails to receive an input of the multimedia content play control command signal.

4. The mobile terminal of any of claims 1-3, wherein:
the wireless communication unit is further configured to interrupt the reception of the selected at least one content under the control of the controller if a shadow area is entered during the course of receiving the selected at least one content, and
the wireless communication unit is further configured to resume receiving the interrupted selected at least one content under the control of the controller if an area in which the selected at least one content is receivable is entered.

5. The mobile terminal of any of claims 14, wherein:
the controller is further configured to determine whether a specific content is stored in the memory when attempting to play back the specific content,
the controller is further configured to search the memory for the specific content and play back the specific content if it is determined that the specific content is stored in the memory, and
the controller is further configured to receive the specific content via the wireless communication unit and play back the specific content if it is determined that the specific content is not stored in the memory.

6. The mobile terminal of any of claims 1-5, wherein the controller is further configured to selectively play back either the selected at least one content or a previously stored at least one content if the previously stored at least one content exists in the memory.

7. The mobile terminal of any of claims 1-6, wherein the controller is further configured to delete one of the selected at least one content according to a selected preference.

8. The mobile terminal of any of claims 1-6.
wherein the controller is further configured to delete the selected at least one content stored in the memory according to a selection received via the user input unit.

9. The mobile terminal of any of claims 1-8, wherein:
the wireless communication unit is further configured to provide update information from a contents database, and
the controller is further configured to reconfigure the generated contents list in accordance with the received update information.

10. A method of controlling content in a mobile terminal, comprising:
receiving (S510) content relevant information via a wireless communication unit which comprises at least two communication modules configured to receive content among a broadcast receiving module, a mobile communication module, a wireless internet module, and a short-range communication module;
selecting (S520) at least one content among to be received contents using the received content relevant information via a user input unit;
configuring a start time for each of the selected at least one content via the user input unit;
generating (S530) a contents list for creating a customized channel via a controller, the contents list including the selected at least one content; and
receiving (S540) the selected at least one content via the wireless communication unit at a specific timing point under the control of the controller;
wherein the selected at least one content is of at least one content type which is one of a real-time mobile broadcast content, a non-real-time mobile broadcast content, a real-time Internet broadcast content, a non-real-time Internet broadcast content or a clip file,
wherein if the selected at least one content is one of the non-real-time mobile broadcast content, the non-real-time Internet broadcast content and the clip file, the specific timing point is one of a completion timing point of generation of the contents list, a timing point after a predetermined duration from the completion timing point of generation of the contents list,
wherein the controller is further configured to store a received selected at least one content and to play back the stored at least one content when a current time reaches the configured start time of the selected at least one content, and
wherein:
the controller is further configured to search for a content of a different content type and identical to the selected at least one content being received if a shadow area with respect to reception of the selected at least one content is entered during the course of rereiving the selected at least one content,
the wireless communication unit is further configured to receive the content identical to the selected at least one content being received under the control of the controller if the content identical to the selected at least one content being received is found, and
the wireless communication unit is further configured to receive a different content receivable through a communication module different from the communication modules used for the reception of the selected at least one content, and included in the contents list under the control of the controller if the content identical to the selected at least one content being received is not found.

11. The method of claim 10, further comprising:
determining (S550) via the controller whether the selected at least one content is playable;
playing back the selected at least one content via the controller if an input of a multimedia content play command signal is received from an external environment and a multimedia module (180) of the mobile terminal is set to an operable status, or if a user designated channel based on the contents list is used in a broadcast output mode; and
storing (S570) the selected at least one content via the controller if the controller fails to receive an input of the multimedia content play control command signal.

## Patentansprüche

1. Mobiles Endgerät (100), das aufweist:
eine drahtlose Kommunikationseinheit (110), die konfiguriert ist, um Inhalt und inhaltsrelevante Informationen zu empfangen, wobei die drahtlose Kommunikationseinheit wenigstens zwei Kommunikationsmodule aufweist, die konfiguriert sind, um Inhalt zwischen einem Rundfunkempfangsmodul, einem mobilen Kommunikationsmodul, einem drahtlosen Internetmodul und einem kurzreichweitigen Kommunikationsmodul zu empfangen;
einen Speicher (160), der konfiguriert ist, um den Inhalt, der empfangen werden soll, und/oder die inhaltsrelevante Information zu speichern;
eine Benutzereingabeeinheit (130), die konfiguriert ist, um wenigstens einen Inhalt aus dem wenigstens einen Inhalt, der empfangen werden soll, unter Verwendung der empfangenen inhaltsrelevanten Information auszuwählen und um eine Startzeit für jeden ausgewählten des wenigstens einen Inhalts zu konfigurieren; und
eine Steuerung (180), die konfiguriert ist, um eine Inhaltsliste zum Erzeugen eines individuell angepassten Kanals zu erzeugen, wobei die Inhaltsliste den ausgewählten wenigstens einen Inhalt umfasst,
wobei die drahtlose Kommunikationseinheit ferner konfiguriert ist, um den ausgewählten wenigstens einen Inhalt, der in der erzeugten Inhaltsliste enthalten ist, als einen spezifischen Zeitpunkt unter der Steuerung der Steuerung zu empfangen,
wobei der ausgewählte wenigstens eine Inhalt von wenigstens einem Inhaltstyp ist, der ein mobiler Echtzeitrundfunkinhalt, ein mobiler Nichtechtzeit-Rundfunkinhalt, ein Echtzeit-Internetrundfunkinhalt, ein Nichtechtzeit-Internetrundfunkinhalt oder eine Clip-Datei ist,
wobei, wenn der ausgewählte wenigstens eine Inhalt der mobile Nichtechtzeit-Rundfunkinhalt, der Nicht-Echtzeit-Internetrundfunkinhalt oder die Clip-Datei ist, der spezifische Zeitpunkt ein Abschlusszeitpunkt der Erzeugung der Inhaltsliste oder ein Zeitpunkt nach einer vorgegebenen Dauer ab dem Abschlusszeitpunkt der Erzeugung der Inhaltsliste ist,
wobei die Steuerung ferner konfiguriert ist, um einen empfangenen wenigstens einen ausgewählten Inhalt zu speichern und den gespeicherten wenigstens einen Inhalt wiederzugeben, wenn eine aktuelle Zeit die konfigurierte Startzeit des ausgewählten wenigstens einen Inhalts erreicht, und
wobei
die Steuerung ferner konfiguriert ist, um nach einem Inhalt eines anderen Inhaltstyps zu suchen, der identisch zu dem ausgewählten wenigstens einen Inhalt ist, der empfangen wird, wenn man im Verlauf des Empfangs des ausgewählten wenigstens einen Inhalts in einen Schattenbereich in Bezug auf den Empfang des ausgewählten wenigstens einen Inhalts eintritt,
die drahtlose Kommunikationseinheit ferner konfiguriert ist, um den Inhalt zu empfangen, der identisch zu dem ausgewählten wenigstens einen Inhalt ist, der unter der Steuerung der Steuerung empfangen wird, wenn der Inhalt, der identisch zu dem wenigstens einem Inhalt, der empfangen wird, gefunden wird, und
die drahtlose Kommunikationseinheit ferner konfiguriert ist, um einen anderen Inhalt zu empfangen, der durch ein Kommunikationsmodul empfangbar ist, das sich von dem Kommunikationsmodul unterscheidet, das für den Empfang des ausgewählten wenigstens einen Inhalts verwendet wird, und in der Inhaltsliste unter der Steuerung der Steuerung enthalten ist, wenn der Inhalt, der identisch zu dem ausgewählten wenigstens einen Inhalt, der empfangen wird, nicht gefunden wird.

2. Mobiles Endgerät nach Anspruch 1, wobei:
die drahtlose Kommunikationseinheit ferner konfiguriert ist, um Inhaltsidentifikationsinformationen, die einem spezifischen Zustand entsprechen, aus einer Inhaltsdatenbank zu empfangen, und
der spezifische Zustand einen Inhaltstyp und/oder eine Gattung und/oder eine Altersgruppe und/oder eine Altersbeschränkung und/oder einen Wochentag und/oder ein Datum und/oder eine Inhaltspräferenz und/oder einen vom Dienstanbieter empfohlenen Inhalt aufweist.

3. Mobiles Endgerät nach einem der Ansprüche 1-2, wobei:
die Steuerung ferner konfiguriert ist, um den ausgewählten wenigstens einen Inhalt wiederzugeben, wenn eine Eingabe eines Multimedia-Inhalteabspielbefehlsignals von einer externen Umgebung empfangen wird, und ein Multimediamodul (180) des mobilen Endgeräts auf einen betriebsfähigen Zustand festgelegt wird oder wenn ein von einem Benutzer basierend auf der Inhaltsliste bestimmter Kanal in einem Rundfunkausgabemodus verwendet wird, und
die Steuerung ferner konfiguriert ist, um den ausgewählten wenigstens einen Inhalt zu speichern, wenn es der Steuerung nicht gelingt, eine Eingabe des Multimedia-Inhalteabspielbefehlsignals zu empfangen.

4. Mobiles Endgerät nach einem der Ansprüche 1-3, wobei:
die drahtlose Kommunikationseinheit ferner konfiguriert ist, um den Empfang des ausgewählten wenigstens einen Inhalts unter der Steuerung der Steuerung zu unterbrechen, wenn man im Verlauf des Empfangs des ausgewählten wenigstens einen Inhalts in einen Schattenbereich eintritt, und
die drahtlose Kommunikationseinheit ferner konfiguriert ist, um den Empfang des unterbrochenen ausgewählten wenigstens einen Inhalts unter der Steuerung der Steuerung wieder aufzunehmen, wenn man in einen Bereich eintritt, in dem der ausgewählte wenigstens eine Inhalt empfangbar ist.

5. Mobiles Endgerät nach einem der Ansprüche 1 bis 4, wobei:
die Steuerung ferner konfiguriert ist, um zu bestimmen, ob ein spezifischer Inhalt in dem Speicher gespeichert ist, wenn versucht wird, den spezifischen Inhalt wiederzugeben,
die Steuerung ferner konfiguriert ist, um den Speicher nach dem spezifischen Inhalt zu durchsuchen und den spezifischen Inhalt wiederzugeben, wenn bestimmt wird, dass der spezifische Inhalt in dem Speicher gespeichert ist, und
die Steuerung ferner konfiguriert ist, um den spezifischen Inhalt über die drahtlose Kommunikationseinheit zu empfangen und den spezifischen Inhalt wiederzugeben, wenn bestimmt wird, dass der spezifische Inhalt nicht in dem Speicher gespeichert ist.

6. Mobiles Endgerät nach einem der Ansprüche 1 *-* 5, wobei die Steuerung ferner konfiguriert ist, um selektiv entweder den ausgewählten wenigstens einen Inhalt oder einen früher gespeicherten wenigstens einen Inhalt wiederzugeben, wenn der früher gespeicherte wenigstens eine Inhalt in dem Speicher vorhanden ist.

7. Mobiles Endgerät nach einem der Ansprüche 1-6, wobei die Steuerung ferner konfiguriert ist, um einen des ausgewählten wenigstens einen Inhalts gemäß einer ausgewählten Präferenz zu löschen.

8. Mobiles Endgerät nach einem der Ansprüche 1 - 6,
wobei die Steuerung ferner konfiguriert ist, um den ausgewählten wenigstens einen Inhalt, der in dem Speicher gespeichert ist, gemäß einer Auswahl, die über die Benutzereingabeeinheit empfangen wird, zu löschen.

9. Mobiles Endgerät nach einem der Ansprüche 1-8, wobei:
die drahtlose Kommunikationseinheit ferner konfiguriert ist, um Aktualisierungsinformationen aus einer Inhaltsdatenbank bereitzustellen, und
die Steuerung ferner konfiguriert ist, um die erzeugte Inhaltsliste gemäß den empfangenen Aktualisierungsinformationen neu zu konfigurieren.

10. Verfahren zum Steuern von Inhalt in einem mobilen Endgerät, das aufweist:
Empfangen (S510) von inhaltsrelevanten Informationen über eine drahtlose Kommunikationseinheit, die wenigstens zwei Kommunikationsmodule aufweist, die konfiguriert sind, um Inhalt an einem Rundfunkempfangsmodul, einem mobilen Kommunikationsmodul, einem drahtlosen Internetmodul und einem kurzreichweitigen Kommunikationsmodul zu empfangen;
Auswählen (S520) wenigstens eines Inhalts aus Inhalten, die empfangen werden sollen, unter Verwendung der empfangenen inhaltsrelevanten Information über eine Benutzereingabeeinheit;
Konfigurieren einer Startzeit für jeden des ausgewählten wenigstens einen Inhalts über die Benutzereingabeeinheit;
Erzeugen (S530) einer Inhaltsliste zum Erzeugen eines individuell angepassten Kanals über eine Steuerung, wobei die Inhaltsliste den ausgewählten wenigstens einen Inhalt umfasst; und
Empfangen (S540) des ausgewählten wenigstens einen Inhalts über die drahtlose Kommunikationseinheit zu einem spezifischen Zeitpunkt unter der Steuerung der Steuerung;
wobei der ausgewählte wenigstens eine Inhalt von wenigstens einem Inhaltstyp ist, der ein mobiler Echtzeitrundfunkinhalt, ein mobiler Nichtechtzeit-Rundfunkinhalt, ein Echtzeit-Internetrundfunkinhalt, ein Nichtechtzeit-Internetrundfunkinhalt oder eine Clip-Datei ist,
wobei, wenn der ausgewählte wenigstens eine Inhalt der mobile Nichtechtzeit-Rundfunkinhalt, der Nicht-Echtzeit-Internetrundfunkinhalt oder die Clip-Datei ist, der spezifische Zeitpunkt ein Abschlusszeitpunkt der Erzeugung der Inhaltsliste oder ein Zeitpunkt nach einer vorgegebenen Dauer ab dem Abschlusszeitpunkt der Erzeugung der Inhaltsliste ist,
wobei die Steuerung ferner konfiguriert ist, um einen empfangenen wenigstens einen ausgewählten Inhalt zu speichern und den gespeicherten wenigstens einen Inhalt wiederzugeben, wenn eine aktuelle Zeit die konfigurierte Startzeit des ausgewählten wenigstens einen Inhalts erreicht, und
wobei
die Steuerung ferner konfiguriert ist, um nach einem Inhalt eines anderen Inhaltstyps zu suchen, der identisch zu dem ausgewählten wenigstens einen Inhalt ist, der empfangen wird, wenn man im Verlauf des Empfangs des ausgewählten wenigstens einen Inhalts in einen Schattenbereich in Bezug auf den Empfang des ausgewählten wenigstens einen Inhalts eintritt,
die drahtlose Kommunikationseinheit ferner konfiguriert ist, um den Inhalt zu empfangen, der identisch zu dem ausgewählten wenigstens einen Inhalt ist, der unter der Steuerung der Steuerung empfangen wird, wenn der Inhalt, der identisch zu dem wenigstens einem Inhalt, der empfangen wird, gefunden wird, und
die drahtlose Kommunikationseinheit ferner konfiguriert ist, um einen anderen Inhalt zu empfangen, der durch ein Kommunikationsmodul empfangbar ist, das sich von dem Kommunikationsmodul unterscheidet, das für den Empfang des ausgewählten wenigstens einen Inhalts verwendet wird, und in der Inhaltsliste unter der Steuerung der Steuerung enthalten ist, wenn der Inhalt, der identisch zu dem ausgewählten wenigstens einen Inhalt, der empfangen wird, nicht gefunden wird.

11. Verfahren nach Anspruch 10, das ferner aufweist:
Bestimmen (S550) über die Steuerung, ob der ausgewählte wenigstens eine Inhalt abspielbar ist;
Wiedergeben des ausgewählten wenigstens einen Inhalts über die Steuerung, wenn eine Eingabe eines Multimedia-Inhalteabspielbefehlsignals von einer externen Umgebung empfangen wird, und ein Multimediamodul (180) des mobilen Endgeräts auf einen betriebsfähigen Zustand festgelegt wird oder wenn ein von einem Benutzer basierend auf der Inhaltsliste bestimmter Kanal in einem Rundfunkausgabemodus verwendet wird, und
Speichern (S570) des ausgewählten wenigstens einen Inhalts über die Steuerung, wenn es der Steuerung nicht gelingt, eine Eingabe des Multimedia-Inhalteabspielbefehlsignals zu empfangen.

## Revendications

1. Terminal mobile (100), comprenant :
une unité de communication sans fil (110) configurée pour recevoir un contenu et des informations relatives au contenu, l'unité de communication sans fil comprenant au moins deux modules de communication configurés pour recevoir un contenu parmi un module de réception de diffusion, un module de communication mobile, un module Internet sans fil et un module de communication de courte portée ;
une mémoire (160) configurée pour mémoriser au moins l'un du contenu à recevoir et des informations relatives au contenu ;
une unité d'entrée d'utilisateur (130) configurée pour sélectionner au moins un contenu parmi l'au moins un contenu à recevoir en utilisant les informations relatives au contenu reçues et pour configurer un temps de début pour chacun de l'au moins un contenu sélectionné ; et
un organe de commande (180) configuré pour générer une liste de contenus afin de créer une chaîne personnalisée, la liste de contenus comprenant l'au moins un contenu sélectionné,
dans lequel l'unité de communication sans fil est en outre configurée pour recevoir l'au moins un contenu sélectionné inclus dans la liste de contenus générée à un point spécifique dans le temps sous le contrôle de l'organe de commande,
dans lequel l'au moins un contenu sélectionné est d'au moins un type de contenu qui est l'un d'un contenu de diffusion mobile en temps réel, d'un contenu de diffusion mobile pas en temps réel, d'un contenu de diffusion Internet en temps réel, d'un contenu de diffusion Internet pas en temps réel ou d'un fichier de clip,
dans lequel, si l'au moins un contenu sélectionné est l'un du contenu de diffusion mobile pas en temps réel, du contenu de diffusion Internet pas en temps réel et du fichier de clip, le point spécifique dans le temps est l'un d'un point dans le temps de fin de génération de la liste de contenus, d'un point dans le temps après une durée prédéterminée à partir du point dans le temps de fin de génération de la liste de contenus,
dans lequel l'organe de commande est en outre configuré pour mémoriser au moins un contenu sélectionné reçu et pour lire l'au moins un contenu mémorisé lorsqu'un temps actuel atteint le temps configuré de début de l'au moins un contenu sélectionné,
et
dans lequel :
l'organe de commande est en outre configuré pour rechercher un contenu d'un type de contenu différent et identique à l'au moins un contenu sélectionné en cours de réception en cas d'entrée dans une zone d'ombre en ce qui concerne la réception de l'au moins un contenu sélectionné au cours de la réception de l'au moins un contenu sélectionné,
l'unité de communication sans fil est en outre configurée pour recevoir le contenu identique à l'au moins un contenu sélectionné en cours de réception sous le contrôle de l'organe de commande si le contenu identique à l'au moins un contenu sélectionné en cours de réception est trouvé, et
l'unité de communication sans fil est en outre configurée pour recevoir un contenu différent pouvant être reçu par l'intermédiaire d'un module de communication différent du module de communication utilisé pour la réception de l'au moins un contenu sélectionné, et inclus dans la liste de contenus sous le contrôle de l'organe de commande si le contenu identique à l'au moins un contenu sélectionné en cours de réception n'est pas trouvé.

2. Terminal mobile selon la revendication 1, dans lequel :
l'unité de communication sans fil est en outre configurée pour recevoir des informations d'identification de contenu correspondant à une condition spécifique à partir d'une base de données de contenus, et
la condition spécifique comprend au moins un type de contenu, un genre, un groupe d'âges, une restriction d'âge, un jour de la semaine, une date, une préférence de contenu ou un contenu recommandé par un prestataire de services.

3. Terminal mobile selon l'une quelconque des revendications 1 et 2, dans lequel :
l'organe de commande est en outre configuré pour lire l'au moins un contenu sélectionné si une entrée d'un signal de commande de lecture de contenu multimédia est reçue à partir d'un environnement externe et un module multimédia (180) du terminal mobile est réglé à un statut utilisable ou si une chaîne désignée par un utilisateur sur la base de la liste de contenu est utilisée dans un mode de sortie de diffusion, et
l'organe de commande est en outre configuré pour mémoriser l'au moins un contenu sélectionné si l'organe de commande ne parvient pas à recevoir une entrée du signal de commande de lecture de contenu multimédia.

4. Terminal mobile selon l'une quelconque des revendications 1 à 3, dans lequel :
l'unité de communication sans fil est en outre configurée pour interrompre la réception de l'au moins un contenu sélectionné sous le contrôle de l'organe de commande en cas d'entrée dans une zone d'ombre au cours de la réception de l'au moins un contenu sélectionné, et
l'unité de communication sans fil est en outre configurée pour reprendre la réception de l'au moins un contenu sélectionné interrompu sous le contrôle de l'organe de commande en cas d'entrée dans une zone dans laquelle l'au moins un contenu sélectionné peut être reçu.

5. Terminal mobile selon l'une quelconque des revendications 1 à 4, dans lequel :
l'organe de commande est en outre configuré pour déterminer si un contenu spécifique est mémorisé dans la mémoire lors de la tentative de lecture du contenu spécifique,
l'organe de commande est en outre configuré pour rechercher le contenu spécifique dans la mémoire et pour lire le contenu spécifique s'il est déterminé que le contenu spécifique est mémorisé dans la mémoire, et
l'organe de commande est en outre configuré pour recevoir le contenu spécifique par l'intermédiaire de l'unité de communication sans fil et pour lire le contenu spécifique s'il est déterminé que le contenu spécifique n'est pas mémorisé dans la mémoire.

6. Terminal mobile selon l'une quelconque des revendications 1 à 5, dans lequel l'organe de commande est en outre configuré pour lire sélectivement soit l'au moins un contenu sélectionné soit au moins un contenu précédemment mémorisé si l'au moins un contenu précédemment mémorisé existe dans la mémoire.

7. Terminal mobile selon l'une quelconque des revendications 1 à 6, dans lequel l'organe de commande est en outre configuré pour supprimer l'un de l'au moins un contenu sélectionné en fonction d'une préférence sélectionnée.

8. Terminal mobile selon l'une quelconque des revendications 1 à 6,
dans lequel l'organe de commande est en outre configuré pour supprimer l'au moins un contenu sélectionné mémorisé dans la mémoire en fonction d'une sélection reçue par l'intermédiaire de l'unité d'entrée d'utilisateur.

9. Terminal mobile selon l'une quelconque des revendications 1 à 8, dans lequel :
l'unité de communication sans fil est en outre configurée pour fournir des informations de mise à jour à partir d'une base de données de contenu, et
l'organe de commande est en outre configuré pour reconfigurer la liste de contenus générée en fonction des informations de mise à jour reçues.

10. Procédé de commande de contenu dans un terminal mobile, comprenant :
la réception (S510) d'informations relatives à un contenu par l'intermédiaire d'une unité de communication sans fil comprenant au moins deux modules de communication configurés pour recevoir un contenu parmi un module de réception de diffusion, un module de communication mobile, un module Internet sans fil et un module de communication de courte portée ;
la sélection (S520) d'au moins un contenu parmi des contenus à recevoir en utilisant les informations relatives au contenu reçues par l'intermédiaire d'une unité d'entrée d'utilisateur ;
la configuration d'un temps de début pour chacun de l'au moins un contenu sélectionné par l'intermédiaire de l'unité d'entrée d'utilisateur ;
la génération (S530) d'une liste de contenus afin de créer une chaîne personnalisée par l'intermédiaire d'un organe de commande, la liste de contenus comprenant l'au moins un contenu sélectionné ; et
la réception (S540) de l'au moins un contenu sélectionné par l'intermédiaire de l'unité de communication sans fil à un point spécifique dans le temps sous le contrôle de l'organe de commande ;
dans lequel l'au moins un contenu sélectionné est d'au moins un type de contenu qui est l'un d'un contenu de diffusion mobile en temps réel, d'un contenu de diffusion mobile pas en temps réel, d'un contenu de diffusion Internet en temps réel, d'un contenu de diffusion Internet pas en temps réel ou d'un fichier de clip,
dans lequel, si l'au moins un contenu sélectionné est l'un du contenu de diffusion mobile pas en temps réel, du contenu de diffusion Internet pas en temps réel et du fichier de clip, le point spécifique dans le temps est l'un d'un point dans le temps de fin de génération de la liste de contenus, d'un point dans le temps après une durée prédéterminée à partir du point dans le temps de fin de génération de la liste de contenus,
dans lequel l'organe de commande est en outre configuré pour mémoriser au moins un contenu sélectionné reçu et pour lire l'au moins un contenu mémorisé lorsqu'un temps actuel atteint le temps configuré de début de l'au moins un contenu sélectionné,
et
dans lequel :
l'organe de commande est en outre configuré pour rechercher un contenu d'un type de contenu différent et identique à l'au moins un contenu sélectionné en cours de réception en cas d'entrée dans une zone d'ombre en ce qui concerne la réception de l'au moins un contenu sélectionné au cours de la réception de l'au moins un contenu sélectionné,
l'unité de communication sans fil est en outre configurée pour recevoir le contenu identique à l'au moins un contenu sélectionné en cours de réception sous le contrôle de l'organe de commande si le contenu identique à l'au moins un contenu sélectionné en cours de réception est trouvé, et
l'unité de communication sans fil est en outre configurée pour recevoir un contenu différent pouvant être reçu par l'intermédiaire d'un module de communication différent du module de communication utilisé pour la réception de l'au moins un contenu sélectionné, et inclus dans la liste de contenus sous le contrôle de l'organe de commande si le contenu identique à l'au moins un contenu sélectionné en cours de réception n'est pas trouvé.

11. Procédé selon la revendication 10, comprenant en outre :
la détermination (S550) par l'intermédiaire de l'organe de commande si l'au moins un contenu sélectionné peut être lu ;
la lecture de l'au moins un contenu sélectionné par l'intermédiaire de l'organe de commande si une entrée d'un signal de commande de lecture de contenu multimédia est reçue à partir d'un environnement externe et un module multimédia (180) du terminal mobile est réglé à un statut utilisable ou si une chaîne désignée par un utilisateur sur la base de la liste de contenu est utilisée dans un mode de sortie de diffusion ; et
la mémorisation (S570) de l'au moins un contenu sélectionné par l'intermédiaire de l'organe de commande si l'organe de commande ne parvient pas à recevoir une entrée du signal de commande de lecture de contenu multimédia.
